# EUROPÄISCHE PATENTANMELDUNG

(11) **EP 3 828 856 A1**
(43) Veröffentlichungstag der Anmeldung: **02.06.2021**
(21) Anmeldenummer: 19212272.9
(22) Anmeldetag: 28.11.2019
(51) Int. Cl.: G08B 25/00, E05B 47/00, G01B 7/04, G07C 9/00, G08B 25/08, G08B 25/10, G08B 13/08, H04W 52/02

(54) **SENSORSYSTEM**

(71) Anmelder: dormakaba Schweiz AG, 8623 Wetzikon (CH)
(72) Erfinder: Mosberger, Philippe, 8623 Wetzikon (CH); Wyss, Stefan, 812 Maur (CH); Hofmann, Jan, 8623 Wetzikon (CH)
(74) Vertreter: Balder IP Law, S.L.

(57) **Zusammenfassung**

Die Erfindung betrifft ein Sensorsystem (60) für ein Verschlusselement (3), insbesondere eine Tür oder ein Fenster, mit einer Sensorvorrichtung (1), wobei die Sensorvorrichtung (1) einen Sensor (20) zum Erfassen von Sensorwerten umfasst, wobei das Sensorsystem (60), insbesondere die Sensorvorrichtung (1), der Sensor (20) zum Detektieren verschiedener Betriebszustände des Verschlusselements (3) ausgebildet ist, indem Sensorwerte den verschiedene Betriebszuständen zugeordnet werdendes Verschlusselements (3) zu detektieren, wobei die detektierbaren Betriebszustände zumindest einen Geöffnet-Riegel-Ausgefahren-Zustand, einen Geöffnet-Riegel-Eingefahren-Zustand, einen Geschlossen-Riegel-Ausgefahren-Zustand und einen Geschlossen-Riegel-Eingefahren-Zustand des Verschlusselements (3) umfassen, wobei das Sensorsystem (60), insbesondere die Sensorvorrichtung (1), dazu ausgebildet ist, Sensorwerte bei Inbetriebnahme zu den Betriebszuständen zuzuordnen.

## Beschreibung

Die Erfindung betrifft ein Sensorsystem für ein Verschlusselement. Das Sensorsystem umfasst eine Sensorvorrichtung. Bei dem Verschlusselement handelt es sich insbesondere um eine Tür oder ein Fenster.

Eine vorbekannte Sensorvorrichtung zeigt WO 2016/149723 A1, dort als Vorrichtung zum Detektieren bezeichnet.

Es ist Aufgabe vorliegender Erfindung, ein Sensorsystem für ein Verschlusselement, insbesondere eine Tür oder ein Fenster, bereitzustellen, das möglichst kleinbauend ist und ein zuverlässiges Erfassen zumindest eines Zustandes am Verschlusselement ermöglicht.

Die Lösung der Aufgabe erfolgt durch die Merkmale des unabhängigen Anspruchs. Die abhängigen Ansprüche haben vorteilhafte Ausgestaltungen der Erfindung zum Gegenstand.

Somit wird die Aufgabe gelöst durch ein Sensorsystem für ein Verschlusselement. Bei dem Verschlusselement handelt es sich insbesondere um eine Tür oder ein Fenster. Das Sensorsystem umfasst eine Sensorvorrichtung. Die Sensorvorrichtung kann kabelgebunden oder kabellos mit einer übergeordneten elektronischen Recheneinheit verbunden sein. Die Kombination aus Sensorvorrichtung und übergeordneter Recheneinheit wird als "Sensorsystem" bezeichnet. Allerdings kann die Rechenleistung auch in der Sensorvorrichtung erbracht werden, sodass die übergeordnete Recheneinheit nicht notwendig ist und folglich die Sensorvorrichtung als Sensorsystem ausgebildet ist.

Die optionale Recheneinheit, insbesondere eine Cloud, ist außerhalb der Sensorvorrichtung angeordnet. Die Recheneinheit kann über ein lokales Netzwerk oder das Internet mit der Sensorvorrichtung zur Kommunikation (auch als Datenübertragung bzw. Datenaustausch bezeichnet) verbunden sein. Insbesondere ist vorgesehen, die Recheneinheit weit entfernt von der Sensorvorrichtung anzuordnen.

Das Sensorsystem kann ein insbesondere mobiles Benutzergerät, z. B. einem Mobiltelefon, ein Tablet, einem Laptop umfassen oder zur Kommunikation mit dem mobilen Benutzergerät ausgebildet sein.

Das Sensorsystem kann eine elektronische Erfassungseinheit aufweisen, die außerhalb der Sensorvorrichtung, aber insbesondere in dessen drahtlosem Kommunikationsbereich, angeordnet ist. Die Erfassungseinheit, beispielsweise ausgebildet als Router oder Gateway, kann die datenübertragende Verbindung zwischen der Recheneinheit und der Sensorvorrichtung darstellen. Die Erfassungseinheit kann die datenübertragende Verbindung zwischen dem Benutzergerät und der Sensorvorrichtung darstellen. Die Erfassungseinheit ist vorgesehen, in der Nähe der Sensorvorrichtung angeordnet zu werden. Die Erfassungseinheit ist zur ortsfesten Installation im Kommunikationsbereich der Sensorvorrichtung ausgebildet.

Die Sensorvorrichtung umfasst vorzugsweise eine Sende- und/oder Empfangseinheit. Die Sende- und/oder Empfangseinheit ist zur Kommunikation, also Datenübertragung, insbesondere drahtlos, mit dem Benutzergerät und/oder der Erfassungseinheit und/oder der Recheneinheit ausgebildet.

Die Sende- und/oder Empfangseinheit ist bevorzugt für eine kabellose Nahbereichskommunikation, z. B. Bluetooth Low Energie oder NFC, ausgebildet. Die Sende- und/oder Empfangseinheit ist bevorzugt nur für eine kabellose Nahbereichskommunikation, insbesondere Bluetooth Low Energie oder NFC, ausgebildet. Die Sende- und/oder Empfangseinheit kommuniziert insbesondere mit der Erfassungseinheit über die kabellose Nahbereichskommunikation. Die Erfassungseinheit befindet sich bevorzugt innerhalb des Kommunikationsbereichs der Sende- und/oder Empfangseinheit.

Es ist vorgesehen, dass die in der Sensorvorrichtung angeordnete Sende- und/oder Empfangseinheit über die Erfassungseinheit und/oder direkt mit dem Benutzergerät kommuniziert. Die Sende- und/oder Empfangseinheit kann mit dem Benutzergerät unmittelbar kabellos kommunizieren, sofern sich das Benutzergerät in dem Kommunikationsbereich der Sende- und/oder Empfangseinheit befindet. Die Recheneinheit befindet sich insbesondere außerhalb des Kommunikationsbereichs der Sende- und/oder Empfangseinheit.

Darüber hinaus kann auch die Kommunikation von der Sende- und/oder Empfangseinheit über die Erfassungseinheit und über die Recheneinheit mit dem Benutzergerät erfolgen. Dies ist insbesondere dann der Fall, wenn das Benutzergerät mit der Recheneinheit über ein externes Netz, insbesondere das Internet oder ein Telekommunikationsnetz, kommuniziert und/oder sich das Benutzergerät außerhalb des Kommunikationsbereichs der Sende- und/oder Empfangseinheit befindet. Die Erfassungseinheit und die Recheneinheit können über das Internet und/oder ein Telekommunikationsnetz verbunden sein.

Die Sensorvorrichtung umfasst erfindungsgemäß einen Sensor zum Erfassen von Sensorwerten. Am Sensor ist vorzugsweise eine Sensorachse definiert.

Des Weiteren umfasst die Sensorvorrichtung bevorzugt eine Elektrik. Die Elektrik ist insbesondere zur Stromversorgung und/oder Ansteuerung des Sensors, insbesondere einer Spule(n) des Sensors, ausgebildet. Vorzugsweise ist die Elektrik zumindest teilweise elektrisch leitend mit dem Sensor, insbesondere der Spule(n), verbunden. Unter "Ansteuerung des Sensors bzw. der Spule" ist zu verstehen, dass die Elektrik den Sensor, insbesondere die Spule, mit einem bestimmten Signal beaufschlagt und/oder dazu ausgebildet ist, ein im Sensor erzeugtes Signal, insbesondere in der Spule induziertes Signal, zu erfassen.

Die Elektrik umfasst vorzugsweise eine Elektronik. Die Elektronik umfasst insbesondere die Sende und/oder Empfangseinheit. Die Elektronik umfasst bevorzugt eine elektronische Steuereinheit, insbesondere einen Prozessor oder Controller. Insbesondere ist die Elektronik aus mehreren Elektronikbauteilen zusammengesetzt. Die Elektronik ist insbesondere zu Ansteuerung des Sensors ausgebildet. Bei Verwendung von einer Spule bzw. mehreren Spulen erfolgt dabei die Ansteuerung der zumindest einen Spule, vorzugsweise aller Spulen. Dabei erfolgt insbesondere ein Beaufschlagen der Spule(n) mit einem Signal und oder ein Abnehmen eines Signals an der/den Spulen(n).

Das Verschlusselement, beispielsweise ausgebildet als Tür oder Fenster, weist ein Verschlusselementblatt, insbesondere ein Türblatt oder Fensterblatt, auf. Dieses Türblatt oder Fensterblatt kann "geöffnet" oder "geschlossen" sein.

Des Weiteren weist das Verschlusselement ein Riegelelement auf. Dieses Riegelelement ist beispielsweise ein Riegel oder eine Falle eines Einsteckschlosses im Türblatt. Das Riegelelement weist den Zustand "Riegel-Ausgefahren" oder "Riegel-Eingefahren" auf. In dem "Riegel-Ausgefahren"-Zustand ragt das Riegelelement weiter von dem Verschlusselementblatt ab als in dem "Riegel-Eingefahren" Zustand.

Daraus ergeben sich die folgenden grundsätzlichen Betriebszustände des Verschlusselementes: Geöffnet-Riegel-Ausgefahren-Zustand, Geöffnet-Riegel-Eingefahren-Zustand, Geschlossen-Riegel-Ausgefahren-Zustand und Geschlossen-Riegel-Eingefahren-Zustand.

Vorzugsweise ist das Sensorsystem, insbesondere die Sensorvorrichtung, dazu ausgebildet verschiedene Betriebszustände des Verschlusselements zu detektieren.

Nach der Montage der Sensorvorrichtung am Verschlusselement erfolgt eine Inbetriebnahme (auch als Kalibrierung bezeichnet).

Erfindungsgemäß ist vorgesehen, dass das Sensorsystem, insbesondere die Sensorvorrichtung, dazu ausgebildet ist, Sensorwerte bei Inbetriebnahme, also insbesondere für die Kalibrierung, den Betriebszuständen zuzuordnen. Eine Zuordnung im Rahmen der Inbetriebnahme ist vorgesehen, um den Sensor an das spezifische Verschlusselement und/oder an das spezifische Riegelelement anzupassen.

Diese Zuordnung erfolgt also nicht durch ein Einspielen von festen Zuordnungen in den Speicher des Sensorsystems, insbesondere der Steuereinheit, sondern das Sensorsystem ist vielmehr dazu ausgelegt, die Zuordnung von einem erfassten Sensorwert zu einem Betriebszustand selbstständig vorzunehmen.

Im Rahmen der Inbetriebnahme werden entsprechenden Sensorwerten, die mit dem Sensor der Sensorvorrichtung erfasst werden, zugehörige Betriebszustände zugeordnet. Dies ermöglicht dann nach der Inbetriebnahme, dass das Sensorsystem, insbesondere die Sensorvorrichtung, verschiedene Betriebszustände des Verschlusselements detektieren kann, indem im Betrieb gemessene Sensorwerte mit den Sensorwerten, die bei der Inbetriebnahme zugehörige Betriebszustände zugeordnet wurden, verglichen werden. Stimmen die gemessenen Sensorwerte mit den Sensorwerten, die bei der Inbetriebnahme einem bestimmten Betriebszustand zugeordnet wurde, innerhalb von Fehlergrenzen überein, so schließt das Sensorsystem, insbesondere die Sensorvorrichtung hieraus, dass der bestimmte Betriebszustand vorliegt.

Hierbei werden erfindungsgemäß bei Inbetriebnahme die Sensorwerte den Betriebszustände Geöffnet-Riegel-Ausgefahren-Zustand, Geöffnet-Riegel-Eingefahren-Zustand, Geschlossen-Riegel-Ausgefahren-Zustand und Geschlossen-Riegel-Eingefahren-Zustand zugeordnet.

Der Sensor umfasst vorzugsweise zumindest eine Spule. Der Einfachheit halber wird im Folgenden stellenweise eine/die Spule beschrieben; dabei ist aber stets zu verstehen, dass vorzugsweise mehrere koaxiale Spulen zur Anwendung kommen. Mit der zumindest einen Spule werden vorzugsweise unterschiedliche Impedanzen und/oder unterschiedliche induzierte Spannungen erfasst.

Die Spule weist insbesondere zumindest eine Wicklung auf, die sich um eine Spulenachse erstreckt; wobei die Spulenachse der Sensorachse entspricht. Die Spule dient insbesondere dazu, von einem Riegelelement durchdrungen zu werden. Die Spule ist also dazu ausgebildet, von einem Riegelelement durchdrungen zu werden.

Besonders bevorzugt weist der Sensor eine Durchgangsaussparung, rundum die Sensorachse, auf. Die Durchgangsaussparung ist dazu ausgebildet, von dem Riegelelement durchdrungen zu werden. Dabei bewegt sich das Riegelelement vorzugsweise parallel zur Sensorachse. Die bevorzugt verwendete Spule erstreckt sich rund um die Durchgangsaussparung.

Durch die zumindest eine Spule, bevorzugt durch die mehreren Spulen kann erfasst werden, ob das Riegelelement eingefahren oder ausgefahren ist und das Verschlusselement geöffnet oder geschlossen ist. Dieses ist besonders bevorzugt. So kann durch den einen Sensor, der als zumindest eine Spule, bevorzugt als mehrere Spulen, ausgebildet ist, die Betriebszustände Geöffnet-Riegel-Ausgefahren-Zustand, Geöffnet-Riegel-Eingefahren-Zustand, Geschlossen-Riegel-Ausgefahren-Zustand und Geschlossen-Riegel-Eingefahren-Zustand erfasst werden.

Alternativ ist der Sensor beispielsweise als zumindest eine Lichtschranke ausgebildet. Die zumindest eine Lichtschranke ist zum Erfassen der Sensorwerte ausgebildet. Hierzu können insbesondere Helligkeitsänderungen am Empfänger der Lichtschranke erfasst werden. Die Lichtschranke kann zur Detektion der verschiedenen Betriebszustände zumindest beitragen. Durch die Lichtschranke kann erfasst werden, ob das Riegelelement eingefahren oder ausgefahren ist, und/oder, ob das Verschlusselement geöffnet oder geschlossen ist.

Wie eingangs erwähnt, ist das Verschlusselement vorzugsweise eine Tür oder ein Fenster. Zwischen dem Türblatt bzw. dem Fensterblatt, allgemein als Verschlusselementblatt bezeichnet, und dem umgebenden Verschlusselementrahmen ist der Verschlusselementspalt ausgebildet. Am Beispiel der Tür ist insbesondere vorgesehen, dass im Türblatt ein Einsteckschloss angeordnet ist. In Richtung des Verschlusselementspalts schließt das Einsteckschloss mit dem Stulp ab. Auf der gegenüberliegenden Seite, im Verschlusselementrahmen montiert oder als integraler Bestandsteil des Verschlusselementrahmens, befindet sich das Schließblech. Aus dem Stulp heraus kann sich ein Riegelelement erstrecken. Dieses Riegelelement erstreckt sich durch den Verschlusselementspalt hindurch entlang der Sensorachse bis in eine entsprechende Öffnung im Schließblech. Dieses Riegelelement ist insbesondere ein Riegel oder eine Falle. Beim Fenster gibt es entsprechende Elemente, die sich durch den Verschlusselementspalt hindurch bis in eine entsprechende Öffnung des Rahmens erstrecken können.

Die hier vorgestellte Sensorvorrichtung ist bevorzugt dazu ausgebildet, um in diesem Verschlusselementspalt angeordnet zu werden. Insbesondere befindet sich die Sensorvorrichtung dabei auf einer dem Verschlusselementspalt zugewandten Seite eines ersten Verschlusselementteils, insbesondere des Verschlusselementblattes, insbesondere des Stulpes, oder des Verschlusselementrahmen, insbesondere des Schließblechs. Das gegenüberliegende Teil ohne Sensorvorrichtung wird als "zweites Verschlusselementteil" bezeichnet. Die Sensorvorrichtung ist dabei so angeordnet, dass die Sensorachse mit dem Riegelelement und der zugehörigen Öffnung fluchtet. Besonders bevorzugt ist die Sensorvorrichtung dabei verschlusselementblattseitig (insbesondere türblattseitig bzw. fensterblattseitig) angeordnet.

Insbesondere weist die Sensorvorrichtung, vorzugsweise an der höchsten bzw. dicksten Stellen, eine Höhe von höchstens 2,5 mm, bevorzugt höchstens 2,3 mm, besonders bevorzugt höchstens 2,1 mm, auf.

Insbesondere für diese Anordnung im Verschlusselementspalt ist bevorzugt vorgesehen, dass die einzelnen Elemente (Sensor und Elektrik) nicht nur in einer Ebene, sondern auch in einer Reihe angeordnet sind. Hierzu ist eine Raumrichtung definiert. Die Raumrichtung ist durch eine Gerade vorgegeben, die quer durch die Sensorachse, insbesondere Spulenachse, verläuft. Die Raumrichtung erstreckt sich von der Sensorachse radial nach außen. Die Elektrik schließt sich entlang dieser Raumrichtung an den Sensor an. Insbesondere schneidet diese Raumrichtung die Elektrik. Am Schnittpunkt der Raumrichtung mit der Sensorachse kann eine dritte imaginäre Achse definiert werden. Diese dritte imaginäre Achse steht senkrecht zur Sensorachse und senkrecht zur Raumrichtung. Diese dritte imaginäre Achse schneidet insbesondere nicht die Elektrik.

Wie eingangs bereits beschrieben, ist die Sensorvorrichtung vorzugsweise zur Kommunikation, also Datenübertragung, mit einer übergeordneten Recheneinheit verbunden. Die Auswertung, also die Detektion verschiedener Betriebszustände anhand der gemessenen Sensorwerte, kann in dieser übergeordneten Recheneinheit, beispielsweise als Cloud-Lösung, erfolgen. Alternativ hierzu ist es jedoch auch möglich, dass die Auswertung in der Sensorvorrichtung selbst, also in dem Element, das am Verschlusselement montiert wird, erfolgt. In diesem Fall ist die Sensorvorrichtung als Sensorsystem ausgebildet und es bedarf nicht zwangsläufig der übergeordneten Recheneinheit. Selbiges gilt auch für den Fall der Inbetriebnahme, also für die Zuordnung von Sensorwerten zu zugehörigen Betriebszuständen. Auch die hierfür notwendige Rechenleistung kann in der Sensorvorrichtung selbst oder in der übergeordneten Recheneinheit erbracht werden.

Bevorzugt ist die Sensorvorrichtung selber dazu ausgebildet, mittels der Kommunikation über die Sende- und/oder Empfangseinheit Sensorwerte bei Inbetriebnahme zu den Betriebszuständen zuzuordnen. Insbesondere kommuniziert die Sensorvorrichtung unmittelbar oder über die Erfassungseinheit mit dem Benutzergerät, um die Zuordnung der Sensorwerte zu den Betriebszuständen zuordnen zu können.

Die Zuordnung wird bevorzugt von der Steuereinheit vorgenommen. Die den Betriebszuständen zugeordneten Sensorwerte sind bevorzugt in der Steuereinheit gespeichert. Ebenfalls kann die Auswertung der Sensorwerte im Betrieb der Sensorvorrichtung durch die Steuereinheit erfolgen.

Das Sensorsystem ist insbesondere dazu ausgebildet, während der Kalibrierung aufgrund einer Benutzereingabe und/oder einer in dem Sensorsystem hinterlegten Information zu erkennen, in welchem Betriebszustand sich das Verschlusselement in einem bestimmten Moment befindet. Sodann erfolgt ein Erfassen von Sensorwerten mit dem Sensor. Der Sensorwert kann dann in einem Rechner des Sensorsystems, bevorzugt in der Steuereinheit, dem zugehörigen Betriebszustand zugeordnet werden. Die Zuordnung kann dort abgespeichert werden. Selbstverständlich kann es sich dabei stets um mehrere Sensorwerte oder Wertebereiche handeln, die einem bestimmten Betriebszustand zugeordnet werden.

Wie im Rahmen dieser Erfindung detailliert beschrieben, umfasst der Sensor vorzugsweise zumindest eine Spule. Das erste Verschlusselementteil ist vorzugsweise zumindest teilweise aus Metall. Insbesondere befindet sich die Sensorvorrichtung bzw. zumindest die Spule des Sensors, am metallenen Stulp eines Einsteckschlosses. Das Sensorsystem, insbesondere die Sensorvorrichtung, ist vorzugsweise dazu ausgebildet, die Änderung der Betriebsposition des Sensors zu dem Metallteil mittels einer Impedanzänderung und/oder mittels einer Änderung eines induzierten Signals in der Spule zu detektieren. Hierzu steht die Spulenachse insbesondere senkrecht zu dem Metallteil. Im Falle eines Stulpes also parallel zur Bewegungsrichtung von Falle bzw. Riegel.

Für die Impedanz- und/oder die Induktionsänderung wird insbesondere eine Amplitudenänderung und/oder Phasenverschiebung detektiert. Bei den Sensowerten kann es sich um Impedanzwerte oder induzierte Spannungswerte handeln. Es kann sich um Amplituden, Amplitudenänderungen und/oder Phasenverschiebungen handeln.

Bevorzugt werden hier die mehreren Spulen verwendet, wie sie im Rahmen dieser Erfindung im Detail beschrieben sind.

Im Folgenden wird die Funktionsweise der Sensorvorrichtung am Beispieleiner Tür und einem Sensor mit Spulen beschrieben. Allerdings ergibt sich selbige Funktionsweise bei der Anwendung an einem Fenster oder sonstigem Verschlusselemente. WO 2016/149723 A1 beschreibt einen Sensor und dessen Verwendung. Der gemäß vorliegender Erfindung verwendete Sensor kann gleich oder ähnlich ausgestaltet sein. Entsprechend kann insbesondere die Ansteuerung der Spule(n) aus WO 2016/149723 A1 auch für vorliegende Erfindung genutzt werden.

Wie bereits in WO 2016/149723 A1 beschrieben, wurde festgestellt, dass sich elektrische Messwerte an der zumindest einen Spule sowohl durch den Zustand des Riegelelements (in WO 2016/149723 A1 als Verriegelungselement bezeichnet) als auch in geringem Ausmaß durch den Türzustand ändern. Allein durch die elektrische Messung mittels des Sensors kann somit auf den Zustand des Riegelelements und auch auf den Türzustand geschlossen werden, ohne dass zusätzliche Taster oder Veränderungen am Riegelelement notwendig wären. Da die Spulenachse so angeordnet wird, dass die zumindest eine Spule vom Riegelelement durchdrungen werden kann, ist es möglich, mittels der Spule zu erfassen, ob sich nun das Riegelelement durch die Spule hindurch erstreckt oder nicht. Hierzu ist das Riegelelement selbstverständlich zumindest teilweise aus Metall. Die Impedanz ändert sich bei geschlossener Tür im Vergleich zu geöffneter Tür aufgrund der Nähe des teilweise metallenen zweiten Verschlusselementteils. Bei Anordnung der Sensorvorrichtung am Türblatt, insbesondere am Stulp, kann mittels des Sensors erfasst werden, ob sich der zumindest teilweise metallene Türrahmen, insbesondere das metallene Schließblech, in der Nähe der Spule befindet und somit die Tür geschlossen ist oder nicht. Bei Anordnung der Sensorvorrichtung am Türrahmen, insbesondere am Schließblech, kann mittels der Spule erfasst werden, ob das zumindest teilweise metallene Türblatt, insbesondere der metallene Stulp bzw. das metallene Schloss, sich in der Nähe der Spule befindet und somit die Tür geschlossen ist oder nicht.

Wenn eine möglichst geringe Bauhöhe durch die Spule(n) erreicht werden soll, ist es zweckmäßig, die Elektronik (Messvorrichtung in WO 2016/149723 A1) so auszubilden, dass sie zur Messung der Impedanz der Spule geeignet ist, während diese mit einem Wechselspannungssignal oder einem Wechselstromsignal beaufschlagt wird. Dabei kann der Sensor mit nur einer Spule ausgestattet werden, wodurch sich eine möglichst geringe Dicke der Sensorvorrichtung ergibt. Die Impedanz der Spule verändert sich, wenn das Riegelelement ein- bzw. ausgefahren wird und in geringem Ausmaß, wenn der teilweise metallene zweite Verschlusselementteil (durch Schließen der Türe) in den Bereich der Spule kommt. Die Impedanz der Spule kann mit vorgegebenen Werten verglichen werden.

Die Zuverlässigkeit der Bestimmung des Zustandes des Riegelelements und des Türblatts kann deutlich erhöht werden, indem mittels der Elektrik an die Spule nacheinander Signale unterschiedlicher Frequenz angelegt werden. Die Impedanz wird dann bei diesen unterschiedlichen Frequenzen bestimmt und diese mit vorgegebenen Werten verglichen. Wenn z. B. bei drei Frequenzen gemessen wird und von jeder Messung auf den Zustand des Riegelelements und ggf. auf den Türzustand geschlossen wird, kann bei unterschiedlichen Ergebnissen eine Mehrheitsentscheidung gefällt werden. Andererseits ist es auch oft möglich, dass zwei Zustände bei einer bestimmten Frequenz sehr ähnliche Messwerte liefern und somit kaum unterschieden werden können, sodass allein aus diesem Grund eine Messung bei verschiedenen Frequenzen angezeigt ist.

Wenn bei mehreren Frequenzen gemessen wird, erhöht sich folglich der Stromverbrauch, verglichen mit einer einzigen Messung. So kann es zweckmäßig sein, den Sensor mit zumindest zwei Spulen auszustatten. Die zumindest zwei Spulen sind dabei koaxial zueinander. Dabei handelt es sich um eine Sendespule und eine Empfangsspule. Die Sendespule wird mit Wechselstrom beaufschlagt. In der Empfangsspule wird die dabei induzierte Spannung erfasst. Die induzierte Spannung in der Empfangsspule ändert sich deutlicher als die Impedanz, insbesondere bei Änderung des Türzustandes. Auf diese Weise können Messungen bei verschiedenen Frequenzen vermieden oder verringert werden, wodurch der Stromverbrauch minimiert werden kann. Der Sensor kann somit mehrere Spulen umfassen, die zur Detektion der Betriebszustände beitragen, insbesondere dazu ausgebildet sind. Hierbei sind unterschiedliche Impedanzen oder unterschiedliche induzierte Spannungen bei zumindest einer Spule, insbesondere der Empfangsspule, erfassbar.

Die Zuverlässigkeit kann noch weiter gesteigert werden, wenn eine weitere Empfangsspule vorgesehen ist, sodass an beiden Seiten der Sendespule jeweils eine Empfangsspule angeordnet ist. Mittels der Elektronik wird die Differenz der in den beiden Empfangsspulen induzierten Spannung erfasst, während die Sendespule mit Wechselstrom beaufschlagt ist.

Folglich ist bevorzugt vorgesehen, dass der Sensor zumindest drei Spulen oder vier Spulen umfasst. Bei der bevorzugten Ausgestaltung des Sensors mit zumindest drei Spulen werden diese zumindest drei Spulen übereinander angeordnet. Die Spulen können koaxial zueinander angeordnet sein. Zumindest eine Sendespule befindet sich dabei, insbesondere symmetrisch, zwischen den beiden Empfangsspulen. Wenn sich nun ein Eisenkern (das Riegelelement) genau symmetrisch in dieser Anordnung befindet, wird in den beiden Empfangsspulen genau die gleiche Spannung induziert, die Differenzspannung zwischen den beiden Empfangsspulen ist daher 0. Wenn sich aber der Eisenkern in die eine oder andere Richtung verschiebt, wird die Anordnung asymmetrisch und es ergibt sich eine induzierte Differenzspannung an den beiden Empfangsspulen. Ebenso verändert sich die induzierte Differenzspannung bei geschlossener Tür im Verhältnis zu einer geöffneten Tür durch die Nähe des zweiten zumindest teilweise metallenen Verschlusselementteils. Es ist möglich, eine Sendespule zwischen den Empfangsspulen anzuordnen. Des Weiteren ist es auch möglich, zwei Sendespulen zwischen den beiden Empfangsspulen anzuordnen. Dabei sind die beiden Sendespulen insbesondere Teil eines gemeinsamen Stromkreises. Ebenso können die beiden Empfangsspulen Teil eines gemeinsamen Stromkreises sein. Daher kann auch von einer Sendespule mit zwei Wicklungsbereichen und einer Empfangsspule mit zwei Wicklungsbereichen gesprochen werden.

Der die zumindest eine Spule umfassende Sensor kann, unabhängig von der Anzahl der Spulen, die Türzustände offen und geschlossen sowie die Riegelelementzustände Riegel-Eingefahren und Riegel-Ausgefahren erfassen. Somit kann die Sensorvorrichtung mittels des Sensors die Betriebszustände Geöffnet-Riegel-Ausgefahren, Geöffnet-Riegel-Eingefahren, Geschlossen-Riegel-Ausgefahren und Geschlossen-Riegel-Eingefahren anhand der Sensorwerte detektieren. Dabei erfolgt mit der Elektronik zumindest das Bestromen der Spule und oder das untermittelbare Erfassen der Impedanz bzw. induzierten Spannung. Die weiteren Auswertungen, beispielsweise der Vergleich mit hinterlegten Werten kann ebenfalls in der Elektronik, insbesondere in der Steuereinheit, oder in der übergeordneten Recheneinheit erfolgen.

Die Sensorvorrichtung ist vorzugsweise dazu ausgebildet, mittels einer Kommunikation über die Sende- und/oder Empfangseinheit Sensorwerte bei Inbetriebnahme den Betriebszuständen zuzuordnen. Für die Zuordnung eines Sensorwerts zum Betriebszustand kann bei der Inbetriebnahme die Sende- und/oder Empfangseinheit auf vielfältige Weise genutzt werden. So ist es bevorzugt vorgesehen, dass die Sensorvorrichtung den Sensorwert über Sende- und/oder Empfangseinheit versendet und die Zuordnung zum Betriebszustand außerhalb der Sensorvorrichtung, beispielsweise im Benutzergerät, in der Erfassungseinheit oder in der übergeordneten Recheneinheit, erfolgt. Darüber hinaus ist es auch möglich, dass die Sende- und/oder Empfangseinheit dazu ausgebildet ist, eine Information über einen aktuellen Betriebszustand zu erhalten, woraufhin dann die Sensorvorrichtung einen Sensorwert erfasst und diesen dem Betriebszustand zuordnet. Zusätzlich oder alternativ kann vorgesehen sein, dass die Sensorvorrichtung über die Sende- und/oder Empfangseinheit ein Kalibrierungsstartsignal sendet oder empfängt.

Es ist bevorzugt vorgesehen, dass das Sensorsystem dazu ausgebildet ist, im Rahmen der Inbetriebnahme die Zuordnung von unterschiedlichen Sensorwerten zu unterschiedlichen Betriebszuständen in einer vorab vorgegebenen Reihenfolge von Betriebszuständen durchzuführen. Somit kann in dem Sensorsystem, bevorzugt in der Sensorvorrichtung, besonders bevorzugt in der Steuereinheit, hinterlegt sein, in welcher Reihenfolge verschiedene Betriebszustände, insbesondere die Betriebszustände Geöffnet-Riegel-Ausgefahren-Zustand, Geöffnet-Riegel-Eingefahren-Zustand, Geschlossen-Riegel-Ausgefahren-Zustand und Geschlossen-Riegel-Eingefahren-Zustand, einzunehmen sind. Insbesondere werden die Betriebszustände nach Empfang eines Kalibrierungsstartsignals Sensorwerten zugeordnet.

Das Sensorsystem, bevorzugt die Sensorvorrichtung, besonders bevorzugt die Steuereinheit, führt zu jedem Betriebszustand eine Referenzmessung mit dem Sensor durch und verknüpft den jeweiligen Betriebszustand mit den Sensorwerten der Referenzmessung.

Die Sende- und/oder Empfangseinheit ist zum Empfang solch eines Kalibrierungsstartsignals ausgebildet. Die Erfassungseinheit ist bevorzugt zum Senden des Kalibrierungsstartsignals ausgebildet. Somit kann das Kalibrierungsstartsignal von der Erfassungseinheit zu der Sensorvorrichtung gesendet werden. Das Benutzergerät kann über die Erfassungseinheit das Kalibrierungsstartsignal an die Sensorvorrichtung senden. Alternativ kann das Benutzergerät das Kalibrierungsstartsignal unmittelbar an die Sensorvorrichtung senden.

Das Kalibrierungsstartsignal kann durch einen Benutzer durch eine Eingabe auf dem Benutzergerät erzeugbar sein. Insbesondere ist vorgesehen, dass das Kalibrierungsstartsignal, beispielsweise von dem Benutzergerät eines Benutzers, insbesondere eines Monteurs, gesendet und von der Sende- und/oder Empfangseinheit empfangen wird. Daraufhin bewegt der Monteur nach einer vorgegebenen Reihenfolge das Verschlusselement in mehrere der Betriebszustände Geöffnet-Riegel-Ausgefahren-Zustand, Geöffnet-Riegel-Eingefahren-Zustand,Geschlossen-Riegel-Ausgefahren-Zustand und Geschlossen-Riegel-Eingefahren-Zustand, insbesondere in alle der Betriebszustände Geöffnet-Riegel-Ausgefahren-Zustand, Geöffnet-Riegel-Eingefahren-Zustand, Geschlossen-Riegel-Ausgefahren-Zustand und Geschlossen-Riegel-Eingefahren-Zustand. Die Sensorvorrichtung ist dazu ausgebildet, durchgehend oder getaktet während dieses Vorgangs Sensorwerte zu erfassen. Das Sensorsystem, insbesondere die Sensorvorrichtung, ist dabei bevorzugt dazu ausgebildet, aus der Vielzahl der Sensorwerte die charakteristischen Sensorwerte für die Betriebszustände Geöffnet-Riegel-Ausgefahren-Zustand, Geöffnet-Riegel-Eingefahren-Zustand, Geschlossen-Riegel-Ausgefahren-Zustand und Geschlossen-Riegel-Eingefahren-Zustand zu identifizieren und den Betriebszuständen Geöffnet-Riegel-Ausgefahren-Zustand, Geöffnet-Riegel-Eingefahren-Zustand, Geschlossen-Riegel-Ausgefahren-Zustand und Geschlossen-Riegel-Eingefahren-Zustand zuzuordnen.

Das Sensorsystem, insbesondere die Sensorvorrichtung, erkennt bevorzugt anhand der gemessenen Sensorwerte, dass ein weiterer Betriebszustand eingenommen worden ist.

Beispielsweise erkennt das Sensorsystem anhand der Höhe der Änderung der Sensorwerte, dass ein weiterer Betriebszustand, ausgehend von dem vorherigen Betriebszustand und/oder von dem Start der Kalibrierung, insbesondere ausgehend von dem Kalibrierungsstartsignal, eingenommen ist. Hierbei kann die Höhe der Änderung, absolut oder prozentual, in dem Sensorsystem, bevorzugt in der Sensorvorrichtung, besonders bevorzugt in der Steuereinheit, hinterlegt sein. Die Änderung kann die Amplitude und/oder die Phasenverschiebung des in den Empfangsspulen induzierten Signals betreffen. Die Sensorwerte der Referenzmessung werden daraufhin mit dem weiteren Betriebszustand verknüpft.

Die Höhe der Änderung der Sensorwerte kann einen Grenzwert für die Höhe der Änderung der Sensorwerte überschreiten, damit das Sensorsystem erkennt, dass ein weiterer Betriebszustand, ausgehend von dem vorherigen Betriebszustand und/oder von dem Start der Kalibrierung, vorliegt.

Zusätzlich oder alternativ erkennt das Sensorsystem, dass ein insbesondere weiterer Betriebszustand eingenommen ist, wenn die Änderungen der Sensorwerte insbesondere einen vorgegebenen Zeitabschnitt lang einen hinterlegten Grenzwert unterschreiten.

Es ist denkbar, dass das Sensorsystem, insbesondere die Sensorvorrichtung, den Benutzer auffordert, nach dem Einstellen eines Betriebszustands eine vorgegebene Zeit zu warten, wobei das Sensorsystem mittels konstanter oder im Wesentlichen konstanter Sensorwerte erkennt, dass ein Betriebszustand vorliegt. Die Aufforderung zu warten kann insbesondere auf dem Benutzergerät angezeigt werden.

Besonders bevorzugt erkennt das Sensorsystem, insbesondere die Sensorvorrichtung, dass ein weiterer Betriebszustand eingenommen ist, wenn die Änderungen der Sensorwerte im Vergleich zu einem vorherigen Betriebszustand einen ersten Grenzwert überschreiten und/oder die Änderungen der Sensorwerte einen vorgegebenen Zeitabschnitt lang einen zweiten Grenzwert unterschreiten. Der erste und der zweite Grenzwert können identisch oder unterschiedlich festgelegt sein. Somit muss der Benutzer dem Sensorsystem nicht mitteilen, dass ein weiterer Betriebszustand eingenommen ist. Vielmehr erkennt das Sensorsystem den weiteren Betriebszustand eigenständig.

Bevorzugt ist vorgesehen, dass das Sensorsystem die Reihenfolge, in welcher die Betriebszustände einzunehmen sind, dem Benutzer mitteilt. Insbesondere kann das Sensorsystem veranlassen, die Reihenfolge auf einem Benutzergerät des Benutzers angezeigt wird. Es kann sein, dass, nachdem das Sensorsystem Sensorwerte einem Betriebszustand zugeordnet hat, der nächste Betriebszustand dem Benutzer mitgeteilt wird. Es kann sein, dass, nachdem das Sensorsystem einen Wechsel des Betriebszustandes detektiert und verarbeitet hat, der nächste Betriebszustand dem Benutzer mitgeteilt wird.

Des Weiteren ist bevorzugt vorgesehen, dass die Sensorvorrichtung, insbesondere die Sende- und/oder Empfangseinheit, dazu ausgebildet ist, ein Signal zu empfangen, das einen Sollbetriebszustand anzeigt. Dieser Sollbetriebszustand ist insbesondere einer der bereits definierten vier Betriebszustände des Verschlusselements, wobei das Signal anzeigt, dass eben ein bestimmter dieser Betriebszustände aktuell von dem Verschlusselement eingenommen wird. Ferner ist die Sensorvorrichtung in dieser bevorzugten Ausgestaltung dazu ausgebildet, zu dem Sollbetriebszustand eine Referenzmessung mit dem Sensor durchzuführen, wobei das Sensorsystem, insbesondere die Sensorvorrichtung, dazu ausgebildet ist, den Sollbetriebszustand mit der Referenzmessung zu verknüpfen und dadurch die Zuordnung zwischen Sensorwert und Betriebszustand herzustellen.

Insbesondere ist zumindest zu einem ersten Betriebszustand während der Kalibrierung oder zu jedem der zumindest detektierbaren Betriebszustände Geöffnet-Riegel-Ausgefahren-Zustand, Geöffnet-Riegel-Eingefahren-Zustand, Geschlossen-Riegel-Ausgefahren-Zustand und Geschlossen-Riegel-Eingefahren-Zustand ein entsprechendes Signal, das den jeweiligen Sollbetriebszustand anzeigt, von der Sensorvorrichtung entsprechend empfangbar.

Bevorzugt ist das Sensorsystem, insbesondere die Sensorvorrichtung, dazu eingerichtet, einen Manipulationsversuch zu detektieren. Auch hier kann die notwendige Rechenleistung in der Sensorvorrichtung selbst erfolgen. Alternativ wird die übergeordnete Recheneinheit hierzu verwendet, wobei dann die Kombination aus Sensorvorrichtung und Recheneinheit das Sensorsystem darstellt.

Insbesondere soll erkannt werden, ob die Sensorvorrichtung am Verschlusselement beschädigt oder entfernt wird, oder ob eine Datenübertragung zwischen Verschlusselement und einem weiteren Element, beispielsweise der Recheneinheit, der Erfassungseinheit oder dem Benutzergerät unterbrochen oder manipuliert ist.

Ea ist bevorzugt vorgesehen, dass die Sensorvorrichtung zur Befestigung auf dem Verschlusselement ausgebildet ist. Dabei ist das Sensorsystem, insbesondere die Sensorvorrichtung, dazu eingerichtet, ein Entfernen von dem Verschlusselement als Manipulationsversuch zu detektieren.

In der montierten Position befindet sich die Sensorvorrichtung in einer sogenannten "Betriebsposition", relativ zum ersten Verschlusselementteil.

Bevorzugt ist vorgesehen, dass die Betriebsposition des Sensors zum ersten Verschlusselementteil im Betrieb des Verschlusselements unveränderbar ist, beispielsweise ist hierzu die gesamte Sensorvorrichtung entsprechend angeklebt. Das Sensorsystem, insbesondere die Sensorvorrichtung, ist vorzugsweise dazu ausgebildet, eine Änderung dieser Betriebsposition des Sensors, insbesondere der gesamten Sensorvorrichtung, zu dem ersten Verschlusselementteil als Manipulationsversuch zu detektieren.

Bevorzugt kann das Sensorsystem, insbesondere die Sensorvorrichtung, den Betriebszustand "Sensor außerhalb der Betriebsposition" detektieren. In dem Betriebszustand "Sensor außerhalb der Betriebsposition" befindet sich der Sensor außerhalb der Betriebsposition. Insbesondere wird der Betriebszustand "Sensor außerhalb der Betriebsposition" durch Sensorwerte bestimmt, die einen Abstand zu dem ersten, zumindest teilweise metallenen Verschlusselementteil charakterisieren, wobei der Abstand größer ist als in der Betriebsposition. Derselbe Sensor, mittels dem die Betriebszustände Geöffnet-Riegel-Ausgefahren, Geöffnet-Riegel-Eingefahren, Geschlossen-Riegel-Ausgefahren und Geschlossen-Riegel-Eingefahren detektiert werden, dient bevorzugt dazu, den Betriebszustand "Sensor außerhalb der Betriebsposition" zu detektieren.

Somit kann das Sensorsystem, insbesondere die Sensorvorrichtung, mittels des Sensors neben den Betriebszustände Geöffnet-Riegel-Ausgefahren, Geöffnet-Riegel-Eingefahren, Geschlossen-Riegel-Ausgefahren und Geschlossen-Riegel-Eingefahren einen weiteren Betriebszustand, nämlich den Betriebszustand "Sensor außerhalb der Betriebsposition" detektieren.

Grundsätzlich ist das Sensorsystem, insbesondere die Sensorvorrichtung, dazu ausgebildet, bei detektiertem Manipulationsversuch ein entsprechendes Signal auszugeben, das den Manipulationsversuch anzeigt. Dieses Signal wird insbesondere über die Sende- und/oder Empfangseinheit der Sensorvorrichtung versendet.

Wie im Rahmen dieser Erfindung detailliert beschrieben, umfasst der Sensor vorzugsweise zumindest eine Spule. Das erste Verschlusselementteil ist vorzugsweise zumindest teilweise aus Metall. Insbesondere befindet sich die Sensorvorrichtung bzw. zumindest die Spule des Sensors, am metallenen Stulp eines Einsteckschlosses. Das Sensorsystem, insbesondere die Sensorvorrichtung, ist vorzugsweise dazu ausgebildet, die Änderung der Betriebsposition des Sensors zu dem Metallteil mittels einer Impedanzänderung und/oder mittels einer Änderung eines induzierten Signals in der Spule zu detektieren. Hierzu steht die Spulenachse insbesondere senkrecht zu dem Metallteil. Im Falle eines Stulpes also parallel zur Bewegungsrichtung von Falle bzw. Riegel. Für die Induktionsänderung wird insbesondere eine Amplitudenänderung und/oder Phasenverschiebung detektiert.

Bevorzugt werden hier die mehreren Spulen verwendet, wie sie im Rahmen dieser Erfindung im Detail beschrieben sind. Die Sensorvorrichtung umfasst Befestigungsmittel zur Befestigung an dem ersten Verschlusselementteil. Das Befestigungsmittel kann insbesondere als das Klebeelement ausgebildet sein. Umfasst der Sensor mehrere Empfangsspulen, so wird in der Empfangsspule, die zu dem Befestigungsmittel gewandt ist, wird bei einem Abstand zu dem ersten Verschlusselementteil, der größer ist als in der Betriebsposition, eine andere, insbesondere geringere, Spannung induziert, als in der Betriebsposition. Insbesondere ändert sich damit auch die Differenzspannung zwischen den beiden Empfangsspulen. Hierdurch lässt die der Betriebszustand "Sensor außerhalb der Betriebsposition" bestimmen.

Des Weiteren ist bevorzugt vorgesehen, dass in dem Sensorsystem, insbesondere in der Sensorvorrichtung, Sensorwerte des Sensors als charakteristische Werte eines Manipulationsversuchs hinterlegt sind. Dadurch ist es möglich, gemessene Sensorwerte mit diesen hinterlegten Werten zu vergleichen und so einen Manipulationsversuch zu identifizieren. Somit werden zumindest einige Sensorwerte, die dem Betriebzustand "Sensor außerhalb der Betriebsposition" zugeordnet sind, ohne Kalibrierung erkannt. Vielmehr sind diese bereits vor der Kalibrierung in dem Sensorsystem, bevorzugt in der Sensorvorrichtung, besonders bevorzugt in der Steuereinheit, hinterlegt.

Bevorzugt ist im Rahmen des Manipulationsschutzes vorgesehen, dass das Sensorsystem, insbesondere die Sensorvorrichtung, dazu ausgebildet ist, definierte Abweichungen der Sensorwerte von den den Betriebszuständen zugeordneten Sensorwerten einem Manipulationsversuch zuzuordnen. Die Abweichungen der Sensorwerte können vor dem Start der Kalibrierung, insbesondere vordem Kalibrierungssignal, in dem Sensorsystem, bevorzugt in der Sensorvorrichtung, besonders bevorzugt in der Steuereinheit, hinterlegt sein. Bei den definierten Abweichungen kann es sich um prozentuale oder absolute Abweichungen handeln. Beispielsweise ist in der Steuereinheit vor der Kalibrierung hinterlegt, dass eine 20% Abweichung von Sensorwerten, die während der Kalibrierung noch zu ermitteln sind, als Manipulationsversuch zu werten ist.

Die Sensorvorrichtung und die Erfassungseinheit sind bevorzugt dazu ausgebildet sind, regelmäßig miteinander kabellos zu kommunizieren. Insbesondere erfolgt die regelmäßige Kommunikation nach der Inbetriebnahme, insbesondere nach der Kalibrierung. Hierbei kann die Erfassungseinheit ein Lebenszeichensignal der Sensorvorrichtung empfangen. Ein Ausbleiben eines Lebenszeichensignals wird als Manipulationsversuch gewertet. Eine Nachricht über den Manipulationsversuch wird von dem Sensorsystem versandt.

An der Sensorvorrichtung sind eine Vorderseite und eine Rückseite definiert. Insbesondere bildet ein Gehäuse der Sensorvorrichtung die Vorderseite und Rückseite, wobei insbesondere vorgesehen ist, dass das Gehäuse zumindest teilweise durch eine/mehrere Platine(n) und/oder einen Deckel und/oder ein Haltelement gebildet ist.

Vorzugsweis ist die Elektrik zumindest teilweise an dem Gehäuse befestigt.

Die Vorderseite zeigt im montierten Zustand in den Verschlusselementspalt. Die Rückseite bildet eine Montagefläche, die zur Auflage am Verschlusselementblatt (insb. Stulp) oder Rahmen (insb. Schließblech) ausgebildet ist. Die entsprechende Fläche, insbesondere am Stulp oder Schließblech, zur Aufnahme der Sensorvorrichtung wird als "Auflagefläche" bezeichnet. Vorzugsweise ist die gesamte Rückseite als ebene Fläche ausgebildet und kann somit als Montagefläche, insbesondere zum Ankleben auf der Auflagefläche, verwendet werden.

Im Folgenden werden unterschiedliche Platinenteile beschrieben. Die Platinenteile können eigenständige Platinen oder auch nur Abschnitte einer größeren Platine sein. Bevorzugt handelt es sich hierbei um harte bzw. steife Platinen, da diese, zumindest in bevorzugten Ausgestaltungen, auch als Gehäusebauteile verwendet werden. Auf und/oder in den Platinenteilen befinden sich Leiterbahnen.

So umfasst die Sensorvorrichtung vorzugsweise ein Elektronikplatinenteil. Die Elektronik ist auf diesem Elektronikplatinenteil angeordnet. Die Elektronik umfasst, wie bereits beschrieben, vorzugsweise mehrere Elektronikbauteile. Insbesondere ist die Sende- und/oder Empfangseinheit auf dem Elektronikplatinenteil angeordnet. Diese Elektronikbauteile können sich in einer Vergussmasse befinden. Diese Vergussmasse bildet dann eine entsprechende Schicht auf dem Elektronikplatinenteil.

Die Sensorvorrichtung umfasst vorzugsweise ein Sensorplatinenteil. Das Sensorplatinenteil nimmt den Sensor auf. Wie bereits beschrieben, umfasst der Sensor vorzugsweise zumindest eine Spule. Diese Spule befindet sich auf dem Sensorplatinenteil oder im Inneren des Sensorplatinenteils. So kann die zumindest eine Spule insbesondere durch Leiterbahnen gebildet sein, die in oder auf dem Sensorplatinenteil ausgebildet sind.

Die Elektrik der Sensorvorrichtung umfasst bevorzugt einen insbesondere elektrochemischen Energiespeicher. Die Sensorvorrichtung umfasst vorzugsweise ein Speicherplatinenteil. Das Speicherplatinenteil ist zumindest zur Kontaktierung des/der Energiespeicher(s) ausgebildet.

In bevorzugter Ausgestaltung ist vorgesehen, dass das Elektronikplatinenteil und das Speicherplatinenteil einstückig ausgebildet sind und somit durch eine gemeinsame Platine gebildet sind.

Die hier vorgestellten Platinenteile erstrecken sich insbesondere in einer zur Sensorachse senkrechten Ebene.

Die Sende- und/oder Empfangseinheit kann stoffschlüssig mit der Vorder- und/oder Rückseite verbunden sein. In einer Ausgestaltung ist die Sende- und/oder Empfangseinheit stoffschlüssig mit der Vorder- und Rückseite verbunden. In diesem Fall ist die Sensorvorrichtung abschnittsweise gehäuselos ausgebildet. In einer alternativen Ausgestaltung ist die Sende- und/oder Empfangseinheit stoffschlüssig mit der Vorder- oder der Rückseite verbunden. In dieser Ausgestaltung ist in dem Abschnitt der Sensorvorrichtung, in der die Sende- und/oder Empfangseinheit angeordnet ist, ein Gehäuse vorhanden. Insbesondere ist die Platine, auf der die Sende- und/oder Empfangseinheit angeordnet ist, stoffschlüssig mit der Vorder- und/oder Rückseite der Sensorvorrichtung verbunden. Die Platine mit der Sende- und/oder Empfangseinheit kann einen Teil des Gehäuses bilden.

Das Sensorplatinenteil bildet vorzugsweise einen Teil des Gehäuses der Sensorvorrichtung. Alternativ oder zusätzlich bildet das Sensorplatinenteil die Vorder- und/oder Rückseite der Sensorvorrichtung und/oder ist stoffschlüssig mit der Vorder- und/oder Rückseite der Sensorvorrichtung verbunden. Insbesondere ist dabei vorgesehen, dass eine Seite des Sensorplatinenteils einen Teil der Vorderseite bildet.

Bevorzugt ist vorgesehen, dass die Sensorvorrichtung das Sockelelement umfasst. Das Sockelelement ist so ausgebildet, um den Sensor, insbesondere die Spule(n), von der Rückseite bzw. der Auflagefläche, auf der die Sensorvorrichtung montiert wird, zu beabstanden.

Die Sensorvorrichtung kann ein Halteelement umfassen. Das Halteelement kann den Energiespeicher aufnehmen und/oder eine Seitenfläche der Sensorvorrichtung bilden.

Das Sockelelement ist vorzugsweise integraler Bestandteil eines Halteelementes und/oder des Elektronikplatinenteils.

Der Sockel umfasst vorzugsweise eine Sockelplatte. In dieser Sockelplatte ist die Durchgangsaussparung ausgebildet. Durch diese Durchgangsaussparung der Sockelplatte kann sich das Riegelelement erstrecken. Beidseitig der Sockelplatte ist vorzugsweise jeweils eine Seitenschiene des Sockelelements ausgebildet. Das Sensorplatinenteil befindet sich vorzugsweise auf der Sockelplatte und zwischen den beiden Seitenschienen.

Des Weiteren ist bevorzugt vorgesehen, dass die Vorderseite der Sensorvorrichtung, also die dem Verschlusselementspalt zugewandte Seite, eben ist. Insbesondere ist dabei vorgesehen, dass das Sockelelement einen Höhenunterschied zwischen dem Sensorplatinenteil einerseits und dem Elektronikplatinenteil und/oder Speicherplatinenteil andererseits ausgleicht. Das Sensorplatinenteil und das Elektronikplatinenteil bzw. Speicherplatinenteil befinden sich somit auf unterschiedlichen Höhen. Das Sockelelement befindet sich im Wesentlichen in der gleichen Ebene wie das Elektronikplatinenteil bzw. Speicherplatinenteil und gleicht somit den Höhenunterschied aus.

Allgemein ist insbesondere für ausreichenden Bauraum des Sensors bevorzugt vorgesehen, dass ein Normalenvektor der Rückseite definiert ist, und das Halteelement im Bereich der Elektrik (40) und im Bereich des Sensors unterschiedlich hoch in Richtung des Normalenvektors ausgebildet ist.

Das Erfassen mittels des Sensors funktioniert umso besser, je größer, bei Verwendung mehrerer Spulen, der Abstand zwischen den Spulen ist bzw. je größer der Abstand einer einzelnen Spule von der Rückseite bzw. Montagefläche ist. Die Monatefläche liegt im montierten Zustand nämlich an der Auflagefläche (z.B. Stulp oder Schließblech) auf. Die Auflagefläche ist im Regelfall aus Metall und stört somit das Messergebnis.

Vorzugsweise ist/sind in Richtung der Spulenachse zumindest eine der Spulen, vorzugsweise zumindest zwei Spulen, besonders vorzugsweise zumindest drei Spulen, besonders vorzugsweise zumindest vier Spulen, versetzt, insbesondere beabstandet, zu dem Elektronikplatinenteil und/oder zu dem Speicherplatinenteil angeordnet. "Versetzt" bedeutet, dass die Mitte der Spule zur Mitte des Platinenteils versetzt ist, und zwar in Richtung der Spulenachse. Die "Beabstandung" bedeutet folgendes: Die Spule weist eine dem Platinenteil zugewandte Seite auf. Das Platinenteil weist eine der Spule zugewandte Seite auf. Zwischen diesen beiden Seiten ist ein Abstand größer 0 vorgesehen.

Grundsätzlich ist im Rahmen der Erfindung vorgesehen, die Sensorvorrichtung möglichst dünn auszugestalten. Dementsprechend wird auch ein möglichst dünnes Elektronikplatinenteil verwendet. Der Abstand zwischen den Spulen bzw. der Abstand der einzelnen Spule zur Montagefläche sollte allerdings trotz der gewünschten dünnbauenden Ausgestaltung zumindest so groß gewählt werden, dass der oben beschriebene Versatz, insbesondere die Beabstandung entsteht.

Gemäß einer ersten Variante ist insbesondere vorgesehen, dass der Sensor zumindest zwei Spulen aufweist und zumindest eine Spule nicht versetzt ist und zumindest eine Spule versetzt, insbesondere beabstandet, zum Elektronikplatinenteil angeordnet ist.

Gemäß einer zweiten Variante ist insbesondere vorgesehen, dass der Sensor zumindest eine Spule, insbesondere zumindest zwei, vorzugsweise zumindest drei, besonders vorzugsweise zumindest vier, Spulen aufweist. Dabei sind vorzugsweise alle Spulen versetzt, insbesondere beabstandet, zum Elektronikplatinenteil angeordnet ist.

Insbesondere bei einer Ausgestaltung, in der der Sensor zumindest zwei Spulen aufweist, ist vorzugsweise Folgendes vorgesehen: Der Bereich, in dem sich die Spulen befinden, ist als Spulenbereich definiert. Dieser Spulenbereich ist insbesondere ist ein Bereich auf dem Sensorplatinenteil. Der Spulenbereich weist bevorzugt eine größere Höhe in Richtung der Spulenachse auf als das Elektronikplatinenteil. Die "Höhe" kann auch als "Dicke" bezeichnet werden. Besonders bevorzugt beträgt die Höhe des Spulenbereichs zumindest 110 % der Höhe des Elektronikplatinenteils.

Die Aufgabe der Erfindung wird auch durch eine Anordnung mit einem Verschlusselement und einem erfindungsgemäßen Sensorsystem gelöst.

Die Aufgabe der Erfindung wird auch durch ein Verfahren zur Inbetriebnahme eines Sensorsystem für ein Verschlusselement, insbesondere eine Tür oder ein Fenster gelöst. Das Sensorsystem kann wie im Rahmen dieser Offenbarung beschrieben ausgebildet sein. Insbesondere ist ein Sensorsystem zur Durchführung des erfindungsgemäßen Verfahrens, insbesondere eines Verfahrens nach Anspruch 15, unter Schutz gestellt, so wie ein Verfahren, dass mit einem Sensorsystem, insbesondere mit einem Sensorsystem nach einem der Ansprüche 1 bis 14, ausgeführt wird.

Das erfindungsgemäße Verfahren wird mittels eines Sensorsystem durchgeführt. Das Sensorsystem umfasst eine Sensorvorrichtung. Die Sensorvorrichtung umfasst einen Sensor zum Erfassen von Sensorwerten. Das Sensorsystem, insbesondere die Sensorvorrichtung ist zum Detektieren verschiedener Betriebszustände des Verschlusselements ausgebildet ist. Das Detektieren der Betriebszustände erfolgt insbesondere nach der Inbetriebnahme im Betrieb des Sensorsystems, insbesondere der Sensorvorrichtung. Die detektierbaren Betriebszustände umfassen zumindest einen Geöffnet-Riegel-Ausgefahren-Zustand, einen Geöffnet-Riegel-Eingefahren-Zustand, einen Geschlossen-Riegel-Ausgefahren-Zustand und einen Geschlossen-Riegel-Eingefahren-Zustand des Verschlusselements. Erfindungsgemäß ordnet das Sensorsystem, insbesondere die Sensorvorrichtung Sensorwerte bei Inbetriebnahme den Betriebszuständen zu.

Die Erfindung wird nun anhand eines Ausführungsbeispiels näher beschrieben. Dabei zeigen:
- Figur 1: eine erfindungsgemäße Anordnung mit erfindungsgemäßer Sensorvorrichtung gemäß allen Varianten,
- Figuren 2 - 9: die erfindungsgemäße Sensorvorrichtung gemäß einer ersten Variante,
- Figur 10: die erfindungsgemäße Sensorvorrichtung gemäß einer zweiten Variante, und
- Figuren 11 - 14: die erfindungsgemäße Sensorvorrichtung gemäß einer dritten Variante.
- Figur 15: eine erfindungsgemäße Sensorvorrichtung gemäß einer vierten Variante,
- Figur 16: ein erfindungsgemäßes Verfahren.

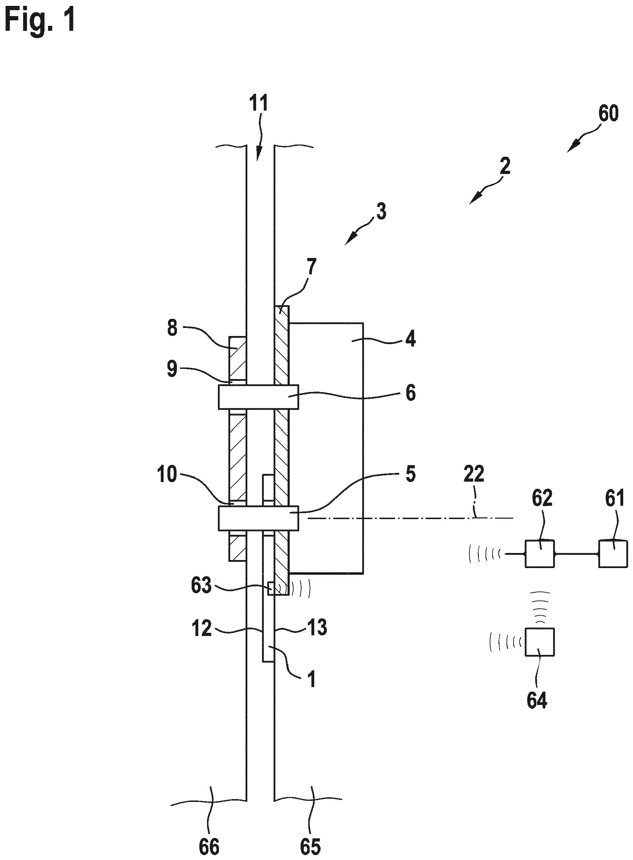

Figur 1 zeigt in rein schematischer Darstellung eine Anordnung 2. Die Anordnung 2 umfasst eine Sensorvorrichtung 1 und ein Verschlusselement 3, hier ausgebildet als Tür. Von dem Verschlusselement 3 ist lediglich ein Ausschnitt gezeigt.

Das Verschlusselement 3 umfasst ein Schloss 4 in einem Türblatt; allgemein als erstes Verschlusselementteil 65 bezeichnet. Das Schloss 4 wiederum weist einen Stulp 7 auf. In dem Schloss 4 befindet sich ein Riegelelement 5, hier ausgebildet als Riegel. Das Riegelelement 5 ist beispielsweise mit einem Schlüssel ein- und ausfahrbar. Das Riegelelement 5 ist entlang einer Spulenachse 22 verschiebbar. Diese Spulenachse 22 ist Teil der Sensorvorrichtung 1 und wird noch im Detail erläutert.

Das Schloss 4 kann ein weiteres Riegelelement 6, beispielsweise in Form einer Falle, aufweisen. Im gezeigten Ausführungsbeispiel durchdringt das Riegelelement 5 die Sensorvorrichtung 1. Allerdings kann die Sensorvorrichtung 1 auch so ausgebildet und angeordnet werden, dass das weitere Riegelelement 6 (Falle) die Sensorvorrichtung 1 durchdringt und mittels der Sensorvorrichtung 1 erfasst wird.

Dem Türblatt liegt der Rahmen, allgemein als zweites Verschlusselementteil 66 bezeichnet, der Anordnung 2 gegenüber. In diesem Rahmen befindet sich, als separates Bauteil oder integraler Bereich, das Schließblech 8. Das Schließblech 8 weist eine Fallenöffnung 9 und eine Riegelöffnung 10 auf. In diese Riegelöffnung 10 erstreckt sich das Riegelelement 5 im ausgefahrenen Zustand. Dementsprechend erstreckt sich das weitere Riegelelement 6 in die Fallenöffnung 9.

Zwischen Stulp 7 und Schließblech 8 ist im geschlossenen Zustand des Verschlusselements ein Verschlusselementspalt 11 ausgebildet. In diesem Verschlusselementspalt 11 befindet sich die Sensorvorrichtung 1. Hierbei befindet sich die Sensorvorrichtung 1 in der Betriebsposition.

Die Sensorvorrichtung 1 weist eine Vorderseite 12 und eine Rückseite 13 auf. Die Vorderseite 12 und Rückseite 13 sind insbesondere senkrecht zur Spulenachse 22 definiert. Die Rückseite 13 bildet die Montagefläche der Sensorvorrichtung 1 und ist auf einer Auflagefläche am Stulp 7 befestigt, insbesondere angeklebt. Die Sensorvorrichtung 1 und somit auch die Auflagefläche können sich über den Stulp 7 hinaus erstrecken.

Die Vorderseite 12 ist dem Verschlusselementspalt 11 zugewandt.

Figur 1 zeigt ferner ein Sensorsystem 60 umfassend die Sensorvorrichtung 1. Zusätzlich umfasst das Sensorsystem 60 auch eine übergeordnete Recheneinheit 61, eine Erfassungseinheit 62 und ein Benutzergerät 64, beispielsweise ein Mobiltelefon. Zur Verdeutlichung zeigt Figur 1 auch rein schematisch die Sende- und/oder Empfangseinheit 63 in der Sensorvorrichtung 1. Die Sende- und/oder Empfangseinheit 63 kommuniziert, insbesondere drahtlos, direkt mit der Recheneinheit 61 und/oder über die Erfassungseinheit 62 mit der Recheneinheit 61. Die Erfassungseinheit 62 befindet sich insbesondere im Kommunikationsbereich für eine drahtlose Datenübertragung mit der Sensorvorrichtung 1, beispielsweise in der Nähe der Tür. Die Erfassungseinheit 62 ist vorzugsweise kabelgebunden mit der Recheneinheit 61 zur Datenübertragung verbunden. Allerdings ist auch hier eine kabellose Übertragung möglich.

Das Benutzergerät 64 kann, insbesondere kabellos, direkt mit der Sende- und/oder Empfangseinheit 63 oder aber über die Recheneinheit 61 oder die Erfassungseinheit 62 mit der Sensorvorrichtung 1 kommunizieren.

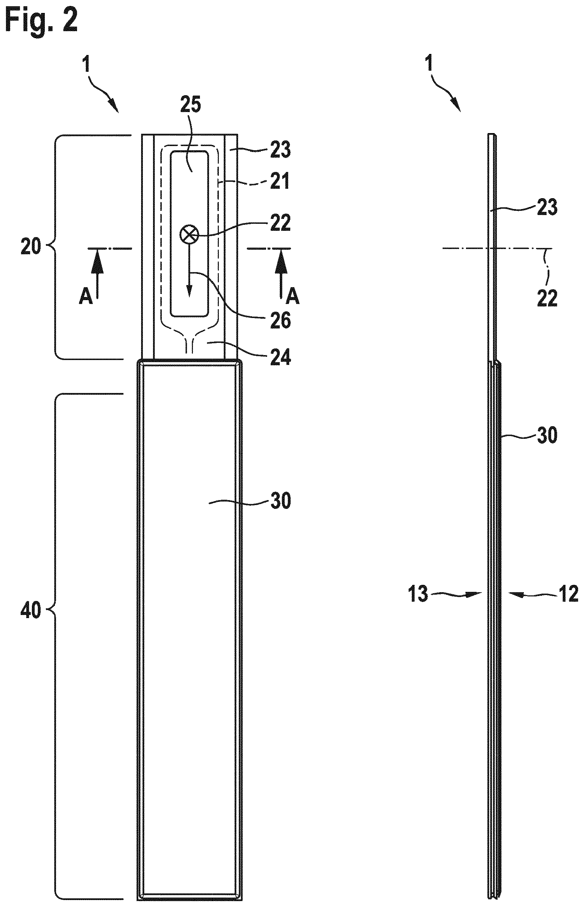

In einer nicht dargestellten Variante ist es auch möglich, die Sensorvorrichtung 1 auf der anderen Seite, nämlich am Schließblech 8 entsprechend anzuordnen. Die Figuren 2 bis 9 zeigen in unterschiedlichen Darstellungen den grundsätzlichen Aufbau der Sensorvorrichtung 1 sowie gewisse Besonderheiten der ersten Variante der Sensorvorrichtung 1.

Im Folgenden wird, soweit nicht explizit anders erwähnt, stets auf die Figuren 2 bis 9 Bezug genommen.

Die Sensorvorrichtung 1 umfasst einen Sensor 20. Der Sensor 20 wiederum weist zumindest eine Spule 21 auf, die hier nur rein schematisch dargestellt ist. Die Spule 21 definiert die Spulenachse 22. Insbesondere ist vorgesehen, dass die zumindest eine Spule 21 in oder auf einem Sensorplatinenteil 24 ausgebildet ist. Insbesondere ist die Spule 21 eine Leiterbahn im Sensorplatinenteil 24. Das Sensorplatinenteil 24 liegt auf einem Sockelelement 23. Das Sockelelement 23 ist insbesondere aus elektrisch nichtleitendem Material, insbesondere Kunststoff gebildet.

Sowohl das Sockelelement 23 als auch die Spule 21 und das Sensorplatinenteil 24 weisen eine Durchgangsaussparung 25 auf. Durch diese Durchgangsaussparung 25 erstreckt sich die Spulenachse 22.

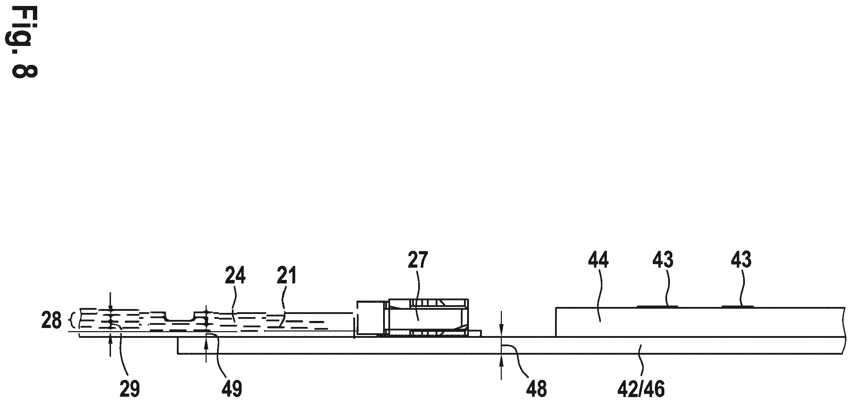

Die Sensorvorrichtung 1 ist in der Anordnung 2 insbesondere so angeordnet, dass sich das Riegelelement 5 durch diese Durchgangsaussparung 25 entlang der Spulenachse 22 erstrecken kann. Bevorzugt sind zumindest ein oder zwei Sendespule(n) und zwei Empfängerspule, die jeweils zumindest eine Wicklung, bevorzugt mehrere Wicklungen umfassen, in Richtung der Spulenachse 22 hintereinander angeordnet. Die Sendespule(n) wird/werden von den Empfängerspulen eingeschlossen. Somit ist ausgehend von der Rückseite 13 der Sensorvorrichtung 1 zunächst eine Empfängerspule, anschließend die Sendespule(n) und anschließend eine weitere Empfängerspule angeordnet. Der Aufbau mit drei Spulen 21 ist in Fig. 8 dargestellt.

In Figur 2, die eine Draufsicht auf die Vorderseite 12 darstellt, verdeckt die dargestellte Empfängerspule 21 die dahinterliegende(n) Sendespule(n) sowie die der Rückseite zugewandte weitere Empfängerspule. Durch die in den beiden Empfängerspulen induzierte Spannungsdifferenz ist es möglich, die Nähe von Metall des zweiten Verschlusselementteil 66 zu detektieren. Hierdurch kann detektiert werden, ob das Verschlusselement geöffnet oder geschlossen ist. Ferner kann durch eine Änderung der induzierten Spannung in den Empfängerspulen detektiert werden, ob das Riegelelement 5 ausgefahren oder eingefahren ist. Somit können mittels des Sensors 20 die Betriebszustände des Verschlusselements 3, nämlich ein Geöffnet-Riegel-Ausgefahren-Zustand, ein Geöffnet-Riegel-Eingefahren-Zustand, ein Geschlossen-Riegel-Ausgefahren-Zustand und ein Geschlossen-Riegel-Eingefahren-Zustand detektiert werden.

Da der Metallanteil der Verschlusselementeteile 65, 66 und des Riegelelements 5 variieren können, werden erfindungsgemäß bei der Inbetriebnahme der Sensorvorrichtung 1 die genannten Betriebszustände Sensorwerten, insbesondere Amplitudenänderungen und/oder Phasenverschiebungen der in den Empfängerspulen induzierten Spannungen oder Spannungsdifferenzen, zugeordnet. Somit wird bei der Inbetriebnahme die Sensorvorrichtung kalibriert. Erfindungsgemäß werden bei der Kalibrierung charakteristische Sensorwerte den Betriebszuständen, nämlich der Geöffnet-Riegel-Ausgefahren-Zustand, der Geöffnet-Riegel-Eingefahren-Zustand, der Geschlossen-Riegel-Ausgefahren-Zustand und der Geschlossen-Riegel-Eingefahren-Zustand, zugeordnet.

Die Sensorvorrichtung weist eine Höhe in Richtung der Spulenachse 22 von höchstens 2,5 mm, bevorzugt 2,3 mm, besonders bevorzugt 2,1 mm auf.

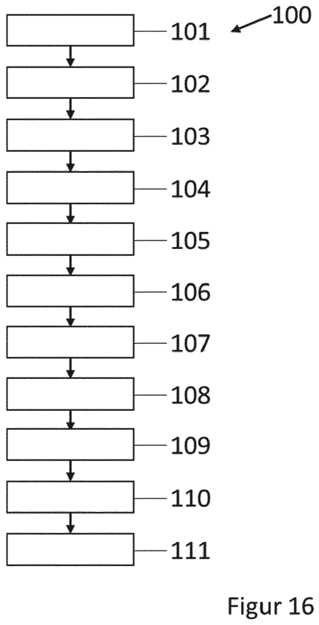

Zur Kalibrierung läuft ein erfindungsgemäßes Verfahren 100 ab, das in Figur 16 dargestellt ist.

In einem ersten Verfahrensschritt 101 macht ein Benutzer eine Eingabe auf dem Benutzergerät 64. Das Benutzergerät 64 sendet daraufhin in einem zweiten Verfahrensschritt 102 ein Kalibierungsstartsignal unmittelbar mittels einer Nahbereichskommunikation, insbesondere Bluetooth Low Energy, an die Sende- und/oder Empfangseinheit 63 als ein Elektronikplatinenbauteil 43 der Sensorvorrichtung 2. Alternativ sendet das Benutzergerät 64 über die Erfassungseinheit 62 das Kalibrierungsstartsignal an die Sensorvorrichtung 2. Daraufhin startet die Sensorvorrichtung 2 in einem dritten Verfahrensschritt 103 die Kalibrierung. Hierbei kann zunächst die Sensorvorrichtung 2 an das Benutzergerät 64 über die Sende- und/oder Empfangseinheit 63 senden, welcher Betriebszustand zunächst durch den Benutzer an dem Verschlusselement einzustellen ist oder in welcher Reihenfolge die Betriebszustände einzustellen sind. Alternativ ist die Reihenfolge, in der die Betriebszustände einzustellen sind, bereits vor dem Start des Verfahrens 100 in dem Benutzergerät hinterlegt.

In einem vierten Verfahrensschritt 104 auf dem Benutzergerät 64 wird angezeigt, welcher Betriebszustand als erstes einzustellen ist. Insbesondere gleichzeitig wird ein Timer in dem Benutzergerät 64 gestartet, der auf dem Benutzergerät 64 für den Benutzer sichtbar ist. Zusätzlich oder alternativ wird in der Sensorvorrichtung 2 ein Timer gestartet. In einem fünften Verfahrensschritt 105 werden wiederholt die Sensorwerte aufgenommen. Liegen Änderungen der Sensorwerte während des Ablaufens des Timers unterhalb eines Grenzwertes, so erkennt die Sensorvorrichtung 2, dass der erste Betriebszustand eingenommen wurde und ordnet die Sensorwerte dem ersten Betriebszustand zu. Die Zuordnung der Sensorwerte zu dem ersten Betriebszustand wird bis zum Ablauf des Timers wiederholt, so dass mehrere Sensorwerte dem ersten Betriebszustand zugeordnet sind. Es können hieraus Mittelwerte als Sensorwerte für den ersten Betriebszustand gebildet werden. Sind bis zum Ende des Timers nicht erreicht, dass die Änderung nacheinander aufgenommene Sensorwerte unter einem Grenzwert liegen, so wird eine Fehlermeldung von der Sensorvorrichtung 2 an das Benutzergerät 64 verschickt.

In einem sechsten Verfahrensschritt 106 ist der Timer abgelaufen. Nun wird auf dem Benutzergerät 64 ein zweiter Betriebszustand angezeigt, den der Benutzer einzustellen hat und insbesondere erneut der Timer in dem Benutzergerät 64 und/oder in der Sensorvorrichtung 2 gestartet. In einem siebten Verfahrensschritt 107 werden wiederholt die Sensorwerte aufgenommen. Liegen Änderungen der Sensorwerte während des Ablaufens des Timers unterhalb eines Grenzwertes, so erkennt die Sensorvorrichtung 2, dass der zweite Betriebszustand eingenommen wurde und ordnet die Sensorwerte dem zweiten Betriebszustand zu. Die Zuordnung der Sensorwerte zu dem zweiten Betriebszustand wird bis zum Ablauf des Timers wiederholt, so dass mehrere Sensorwerte dem zweiten Betriebszustand zugeordnet sind. Es können hieraus Mittelwerte als Sensorwerte für den zweiten Betriebszustand gebildet werden.

In weiteren Verfahrensschritten 108, 109, 110 und 111 werden die Verfahrensschritte 106 und 107 jeweils für den dritten und vierten Betriebszustand wiederholt. Danach ist die Kalibrierung abgeschlossen.

Zusätzlich oder alternativ zur Unterschreitung des Grenzwerts in den Verfahrensschritten 107, 109 und 111 kann es sein, dass die Änderung der Sensorwerte von dem ersten Betriebszustand zu weiteren gemessenen Sensorwerten, die eventuell einem zweiten bzw. dritten bzw. vierten Betriebszustand zuzuordnen wären, einen Grenzwert überschreiten müssen, damit die weiteren gemessenen Sensorwerten dem zweiten bzw. dritten bzw. vierten Betriebszustand zugeordnet werden.

Zusätzlich oder alternativ zu den Verfahrensschritten 104 und 105 kann bei der Zuordnung der Sensorwerte zu dem ersten Betriebszustand zunächst auf dem Benutzergerät 64 angezeigt werden, welcher Betriebszustand als erstes einzustellen ist. Danach kann die Sensorvorrichtung 2 eine Bestätigung durch den Benutzer, dass der erste Betriebszustand vorliegt, eingeholen. Die Bestätigung kann auf dem Display des Benutzergeräts 64 eingegeben werden. In diesem Fall kann ein Starten des Timers und ein Unterschreiten des Grenzwertes bei den Verfahrensschritten 104 und 105 entfallen.

Alternativ zu den beschriebenen Verfahrensschritten 105, 107, 109 und 111 wird in dem Benutzergerät 64 kein Timer gestartet. In der Sensorvorrichtung 2 wird zunächst gewartet, bis die Änderungen der Sensorwerte unterhalb eines Grenzwertes liegen. Danach wird ein Timer gestartet. Verbleiben die Sensorwerte unterhalb des Grenzwertes für einen vorbestimmte Zeitabschnitt, so ordnet die Sensorvorrichtung 2 die Sensorwerte der Zeitabschnitt dem jeweiligen Betriebszustand zu. Es können hieraus Mittelwerte für den jeweiligen Betriebszustand gebildet werden.

Alternativ zu dem Verfahrensschritt 101 kann das Kalibrierungsstartsignal von der Sensorvorrichtung 1 über die Sende- und/oder Empfangseinheit 63 zu dem Benutzergerät 64 gesendet werden, beispielsweise nachdem Energiespeicher 45 in die Sensorvorrichtung eingesetzt wurden. Wichtig ist, dass die Sensorvorrichtung 1 und das Benutzergerät 64 sich darüber verständigen, dass die Kalibrierung beginnen soll.

Um ein Entfernen der Sensorvorrichtung 1 von dem ersten Verschlusselementteil 65 als Manipulationsversuch zu detektieren, kann die Sensorvorrichtung 1 einen weiteren Betriebszustand detektieren, nämlich den Betriebszustand "Sensor außerhalb der Betriebsposition". Hierbei handelt es sich um einen Zustand, bei dem der Sensor 20 oder die gesamte Sensorvorrichtung 1 von dem ersten Verschlusselemententeil 65 entfernt wurde. Hierbei ändert sich insbesondere die induzierte Spannung, die in der Empfängerspule, die dem ersten Verschlusselemententeil 65 zugewandt ist, induziert wird. Typische Werte für den Betriebszustand "Sensor außerhalb der Betriebsposition", insbesondere der Amplituden und/oder der Phasenverschiebungen der induzierten Spannung der der Rückseite 13 zugewandten Empfängerspule und/oder der induzierten Spannungsdifferenzen der beiden Empfängerspulen, sind in einer elektronischen Steuereinheit 57 der Sensorvorrichtung 1 bereits vor der Inbetriebnahme der Sensorvorrichtung 1 fest hinterlegt.

Ferner sind Abweichungen von den Sensorwerten, die die Betriebszustände Geöffnet-Riegel-Ausgefahren, Geöffnet-Riegel-Eingefahren, ein Geschlossen-Riegel-Ausgefahren und ein Geschlossen-Riegel-Eingefahren vor der Inbetriebnahme in der Steuereinheit 57 hinterlegt. Die Abweichungen können als prozentuale oder absolute Abweichungen von den Sensorwerten für die Betriebszustände Geöffnet-Riegel-Ausgefahren, Geöffnet-Riegel-Eingefahren, ein Geschlossen-Riegel-Ausgefahren und ein Geschlossen-Riegel-Eingefahren definiert sein. Weichen die gemessenen Sensorwerte um die fest hinterlegten Abweichungen von den in der Kalibrierung festgelegten Sensorwerten für die Betriebszustände Geöffnet-Riegel-Ausgefahren, Geöffnet-Riegel-Eingefahren, ein Geschlossen-Riegel-Ausgefahren und ein Geschlossen-Riegel-Eingefahren ab, so wird ein Manipulationsversuch detektiert.

Um regelmäßig zu detektieren, ob eine elektrische Stromversorgung innerhalb der Sensorvorrichtung 2 unterbrochen wurde, kommuniziert die Sensorvorrichtung 1 regelmäßig mit der Erfassungseinheit 62. Bei einem Ausbleiben der Kommunikation wird auf einen Manipulationsversuch geschlossen. Somit wird regelmäßig die elektrische Energieversorgung der Steuereinheit 57 und der Sende- und/oder Empfangseinheit 63 der Sensorvorrichtung 1 überprüft, so dass ein Manipulationsversuch schnell entdeckt wird.

Der Recheneinheit 61 kann eine Information eines Benutzers vorliegen, dass der Benutzer die Aktivierung des Sensors wünscht. Einerseits kann der Benutzer einen Befehl zur Aktivierung des Sensors in das mobile Benutzergerät 64 eingeben, woraufhin über die Recheneinheit 61 und die Erfassungseinheit 62 der Befehl an die Sensorvorrichtung 1 weitergeleitet wird, woraufhin die Sensorvorrichtung 1 den Sensor 20 aktiviert. Hierdurch kann Energie gespart werden. Die Sende- und/oder Empfangseinheit 62 wird nach der Kalibrierung somit auch im Betrieb des Sensorsystems 60 verwendet.

Die Sensorvorrichtung 1 ist in der Anordnung 2 insbesondere so angeordnet, dass sich das Riegelelement 5 durch diese Durchgangsaussparung 25 entlang der Spulenachse 22 erstrecken kann.

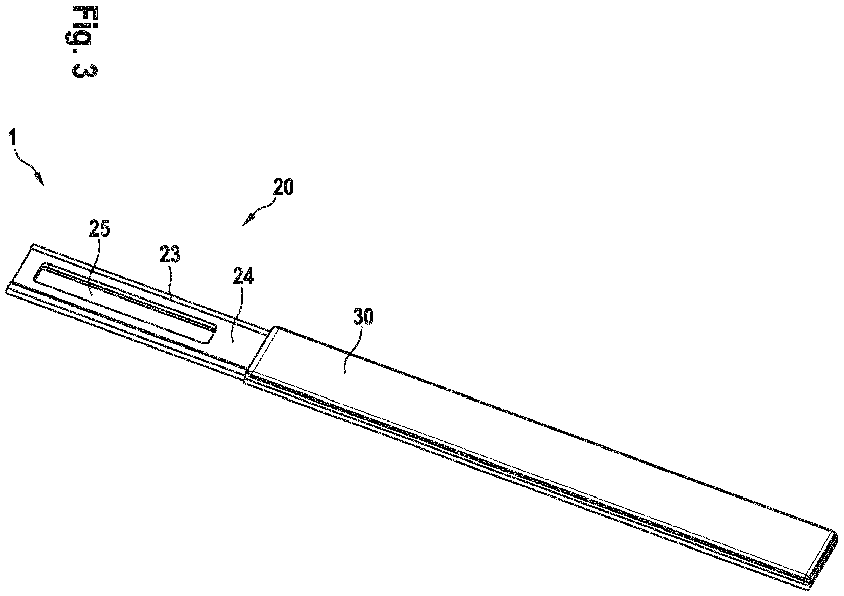

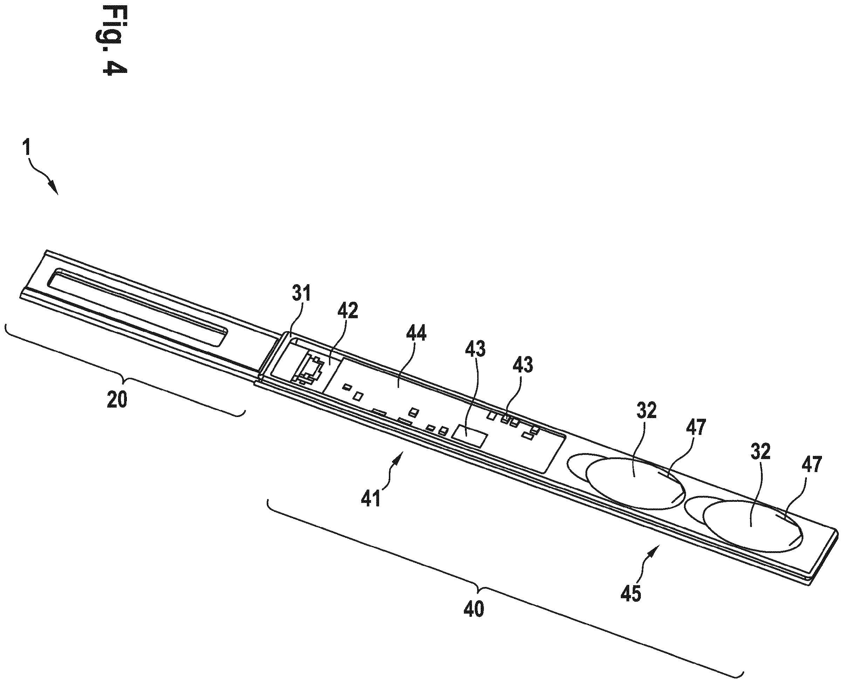

Neben dem Sensor 20 umfasst die Sensorvorrichtung 1 eine Elektrik 40. Diese Elektrik 40 ist mit einem Deckel 30 verschlossen. Figuren 2 und 3 zeigen diesen Deckel 30. In Figur 4 ist der Deckel 30 ausgeblendet.

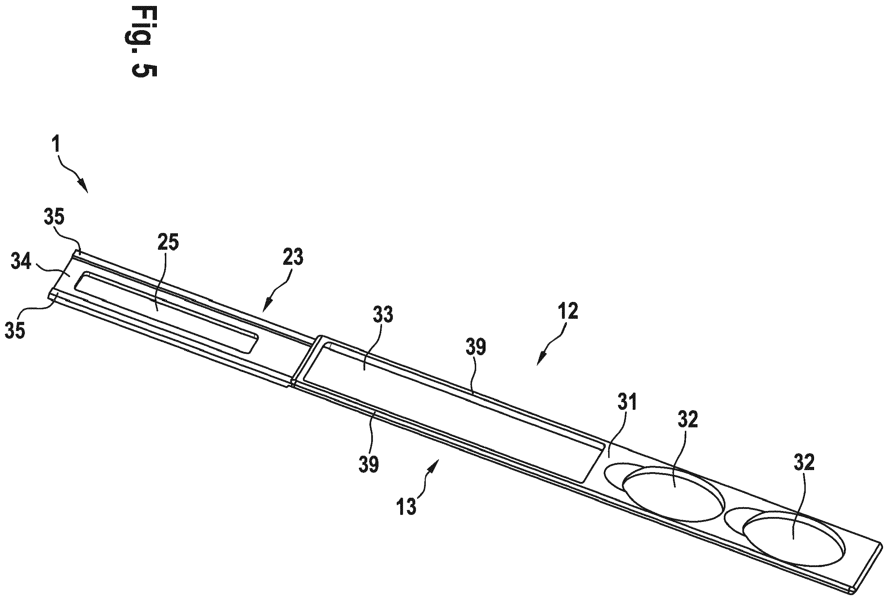

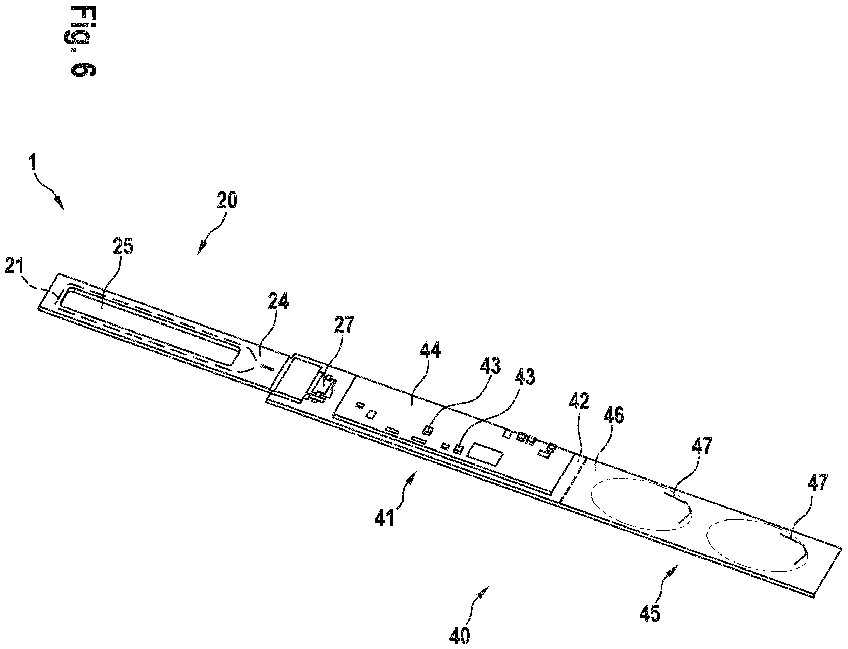

Die Sensorvorrichtung 1 umfasst ein Halteelement 31, insbesondere aus Kunststoff. Insbesondere bilden das Halteelement 31 und das Sockelelement 23 ein einstückiges Bauteil. Figur 5 zeigt das Halteelement 31 in Alleinstellung. In Figur 6 sind der Deckel 30 und das Halteelement 31 ausgeblendet.

Wie insbesondere die Figuren 4 und 6 zeigen, umfasst die Elektrik 40 eine Elektronik 41 und Energiespeicher 45. Die Energiespeicher 45 sind hier als Knopfbatterien ausgebildet.

Die Elektronik 41 setzt sich zusammen aus mehreren Elektronikbauteilen 43, die auf einem Elektronikplatinenteil 42 angeordnet sind. Die Elektronikbauteile 43 befinden sich in einer Vergussmasse 44.

Das Elektronikplatinenteil 42 ist einteilig mit einem Speicherplatinenteil 46 ausgestaltet. Lediglich der Übersichtlichkeit halber ist in Figur 6 eine gestrichelte, imaginäre Grenze zwischen Elektronikplatinenteil 42 und Speicherplatinenteil 46 eingezeichnet.

Auf dem Speicherplatinenteil 46 befinden sich für die beiden Energiespeicher 45 Energiespeicherkontakte 47. Wie beispielsweise Figur 4 zeigt, sind im Halteelement 31 zwei Energiespeicheraufnahmen 32 ausgebildet. Die beiden Energiespeicheraufnahmen 32 sind Durchgangsaussparungen im Halteelement 31. In diese Energiespeicheraufnahmen 32 können die beiden Energiespeicher 45 eingesetzt werden und können dabei durch die Energiespeicherkontakte 47 kontaktiert werden.

Des Weiteren bildet das Haltelement eine Elektronikaussparung 33, ebenfalls ausgebildet als Durchgangsaussparung, umgeben von Seitenwänden 39. In diese Elektronikaussparung 33 ragt die Elektronik 41, insbesondere die Vergussmasse 44 mit den Elektronikbauteilen 43.

Die elektrisch leitende Verbindung zwischen Elektronikplatinenteil 42 und Sensorplatinenteil 24 erfolgt hier über eine Steckverbindung 27. Diese Steckverbindung 27 erstreckt sich ebenfalls in die Elektronikaussparung 33 des Halteelements 31.

Wie beispielsweise Figur 2 zeigt, ist die gesamte Elektrik 40 auf einer Seite des Sensors 20 angeordnet. Figur 2 zeigt hierzu eine Raumrichtung 26, die senkrecht zur Spulenachse 22 definiert ist und die Spulenachse 22 schneidet. Entlang dieser Raumrichtung 26 sind die Elektronik 41 und die Energiespeicher 45 angeordnet. Die Elektronik 41 befindet sich dabei zwischen den Energiespeichern 45 und dem Sensor 20.

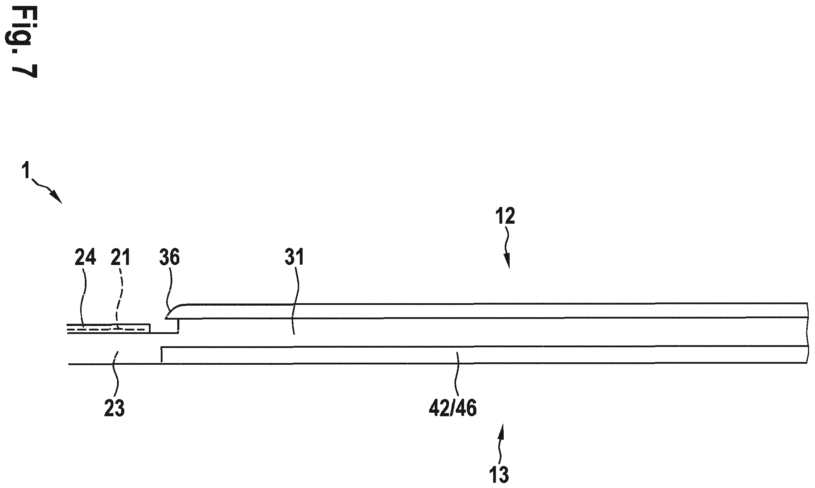

Figur 7 zeigt im Detail den Bereich zwischen Sensor 20 und Elektrik 40. Der Deckel 30 ist dabei ausgeblendet. Hierbei ist gut zu sehen, dass das Halteelement 31 an der Vorderseite 12 eine Halteelementkrempe 36 aufweist. Diese Halteelementkrempe 36 umgibt die Elektrik 40, insbesondere die Elektronikaussparung 33 und die Energiespeicheraufnahmen 32. Auf die Haltelementkrempe 36 kann der Deckel 30, insbesondere in einer elastischen Ausgestaltung, beispielsweise aus Silikon, aufgesteckt werden. Die Ränder des Deckels 30 umgreifen im aufgesteckten Zustand die Halteelementkrempe 36.

Der Deckel 30 und der Sensorplatinenteil 34 bilden somit die Außenseite und somit auch das Gehäuse der Sensorvorrichtung 1 auf der Vorderseite 12.

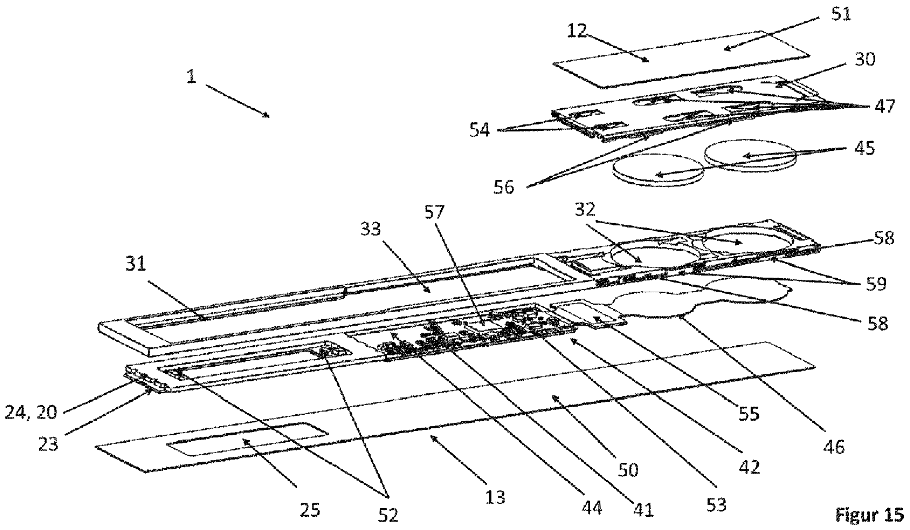

Die Rückseite 13, somit die Montagefläche und das rückseitige Gehäuse der Sensorvorrichtung 1 wird durch ein Klebeelement 50 gebildet, das in Figur 15 für ein weiteres Ausführungsbeispiel ausgebildet ist. Das Klebeelement 50 ist identisch für das erste Ausführungsbeispiel der Figuren 2-9 ausgebildet. Auf dem Klebeelement 50 sind das Sockelelement 23 und die Außenseite des Elektronikplatinenteils 42 und Speicherplatinenteils 46 stoffschlüssig befestigt, insbesondere aufgeklebt. Somit bilden das Klebeelement 50, das Sockelelement 23, das Elektronikplatinenteil 42 und das Speicherplatinenteil 46 gemeinsam das rückseitige Gehäuse. Das Klebeelement 50 weist ebenfalls die Durchgangsaussparung 25 für das Riegelelement 5 auf.

Figur 8 zeigt dieselbe Darstellung wie Figur 7, jedoch ohne Halteelement 31. Die beiden Figuren 7 und 8 verdeutlichen den Versatz zwischen Elektronikplatinenteil 42 und Spule(n) 21. In Figur 8 sind beispielhaft drei Spulen 21 eingezeichnet. In der gezeigten Variante sind alle Spulen (21) nicht nur versetzt, sondern weisen sogar einen Abstand 49 zum Elektronikplatinenteil 42 auf.

Figur 8 zeigt ferner einen Spulenbereich 28, in dem sich die drei Spulen 21 befinden. Dieser Spulenbereich 28 ist insbesondere Bestandteil des Sensorplatinenteils 24. Der Spulenbereich 28 erstreckt sich vom oberen Ende der obersten Spule 21 bis zum untersten Ende der untersten Spule 21. Der Spulenbereich 28 weist parallel zur Spulenachse 22 eine erste Höhe 29 auf. Das Elektronikplatinenteil 42 erstreckt sich parallel zur Spulenachse 22 über eine zweite Höhe 48. Diese zweite Höhe 48 ist bevorzugt kleiner als die erste Höhe 29.

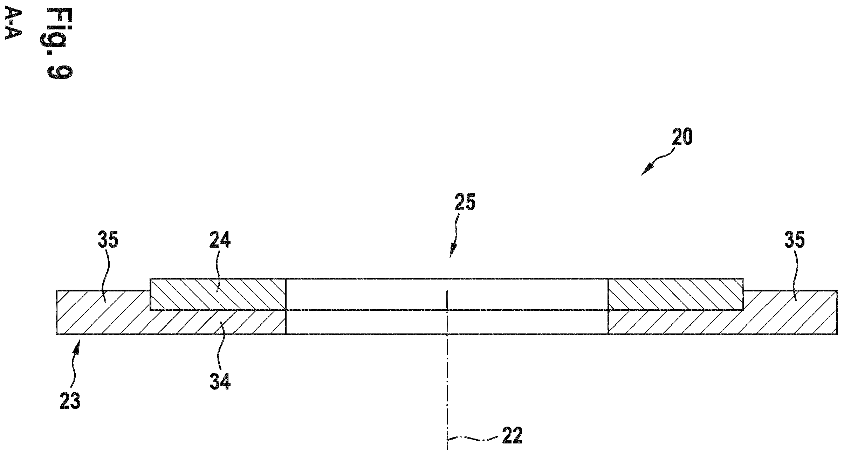

Figur 9 verdeutlicht den in Figur 2 gekennzeichneten Schnitt A:A. An dieser Darstellung ist der genaue Aufbau des Sockelelements 23 gut zu erkennen. Das Sockelelement 23 umfasst demgemäß die Sockelplatte 34 zur Aufnahme des Sensorplatinenteils 24. Seitlich des Sensorplatinenteils 24 sind zwei Seitenschienen 35 des Sockelelements 23 zur formschlüssigen Aufnahme des Sensorplatinenteils 34 angeordnet.

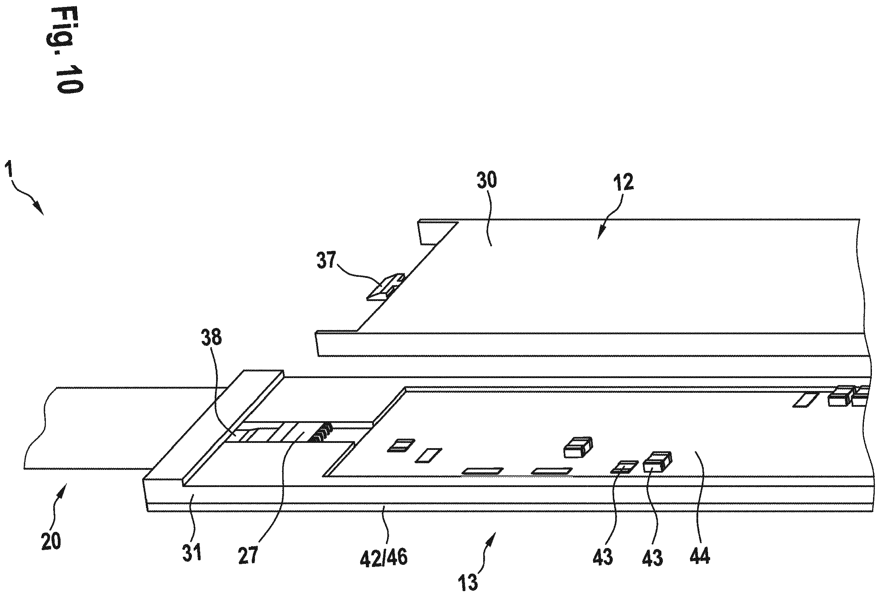

Figur 10 zeigt eine Variante der Sensorvorrichtung 1. Der grundsätzliche Aufbau der Sensorvorrichtung 1 ist hier wie in den Figuren 2 bis 9 beschrieben. Lediglich der Deckel 30 und seine Verbindung mit dem Halteelement 31 ist hier anders ausgestaltet. Der Deckel gemäß Figur 10 wird senkrecht zur Spulenachse 22 entgegen der Raumrichtung 26 auf das Halteelement 31 aufgeschoben. Der Deckel 30 weist eine Rastzunge 37 auf. Im Halteelement 31 ist eine Zungenaufnahme 38 ausgebildet. Im geschlossenen Zustand rastet die Rastzunge 37 in die Zungenaufnahme 38 ein.

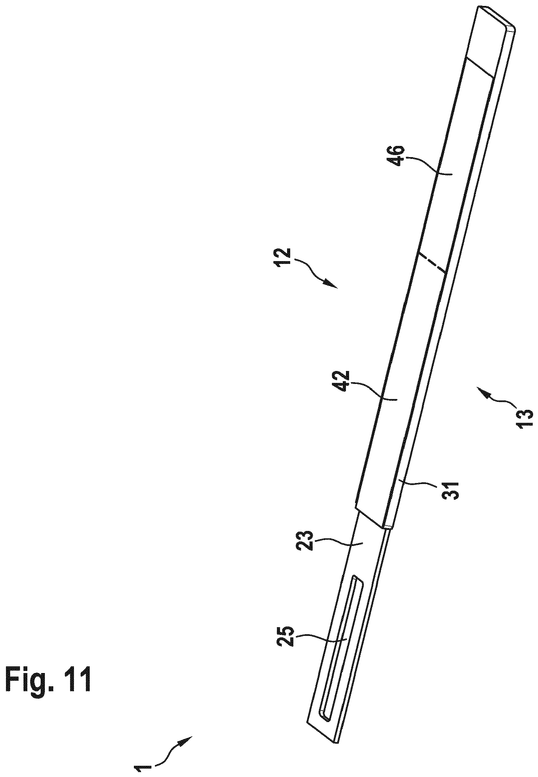

Die Figuren 11 bis 14 zeigen eine Variante der Sensorvorrichtung 1, bei der nicht die Rückseite 13 durch die Außenseiten des Elektronikplatinenteils 42 und Speicherplatinenteils 46, sondern die Vorderseite 12 durch diese Elemente gebildet wird. Demgemäß fungieren hier die beiden Platinenteile 42, 46 auch als Deckel und bilden insofern einen Teil des Gehäuses.

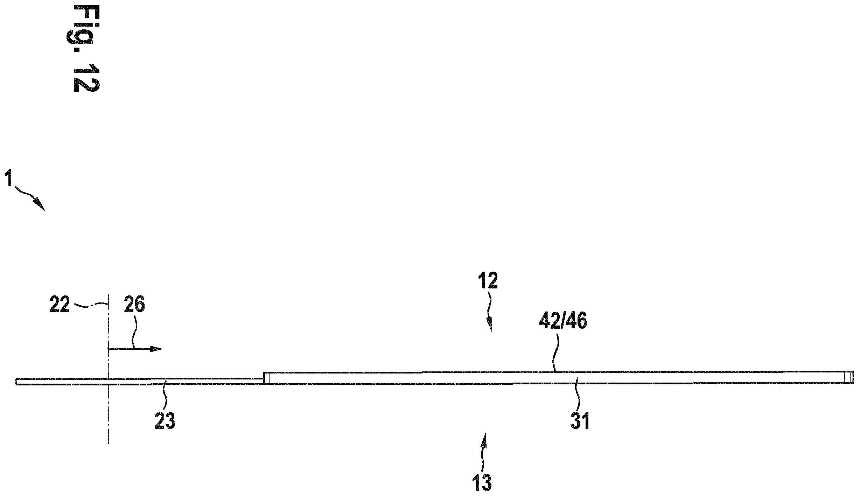

Figuren 11 und 12 zeigen die geschlossene Sensorvorrichtung 1. Das Sensorplatinenteil 24 ist hier wie in den vorhergehenden Varianten ausgestaltet, der Übersichtlichkeit halber jedoch nicht gezeigt.

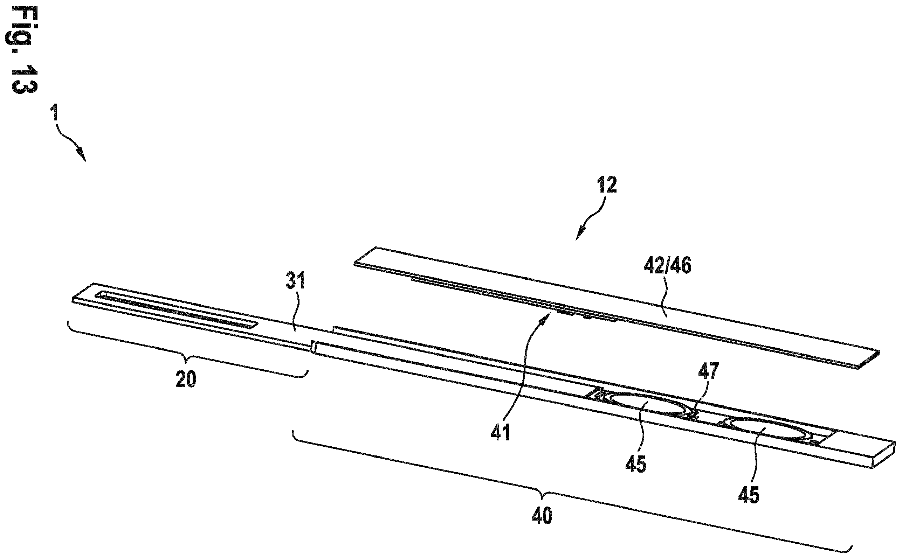

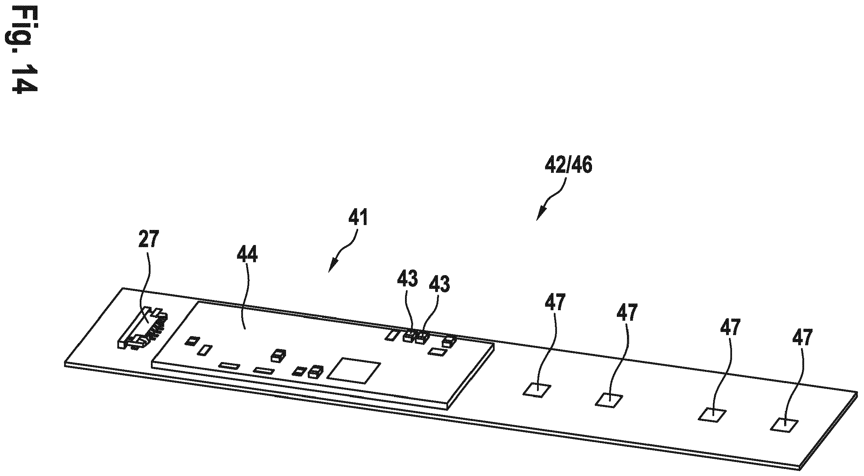

Figur 13 zeigt eine Explosionsdarstellung. Figur 14 zeigt lediglich die Innenseite des Elektronikplatinenteils 42 und Speicherplatinenteils 46, auch hier in einer einstückigen Ausgestaltung.

In der Variante gemäß den Figuren 11 bis 14 bildet die Außenseite des Haltelements 31 das Gehäuse auf der Rückseite 13 der Sensorvorrichtung. Auch hier ist das Haltelement 31 einstückig mit dem Sockelelement 32 ausgebildet.

An der Vorderseite 12 wird das Haltelement 31 durch das Elektronikplatinenteil 42 und das Speicherplatinenteils 46 verschlossen. Die außenliegende Seite dieser Platinenteile 42, 46 bildet somit das Gehäuse der Sensorvorrichtung auf der Vorderseite 12.

Die beiden Energiespeicher 45 werden hier in das Haltelement 31 eingesetzt. Wie insbesondere Figur 14 zeigt, befinden sich auf dem Speicherplatinenteil 46 entsprechende Energiespeicherkontakte 47. Diese Energiespeicherkontakte 47 können im zusammengebauten Zustand der Sensorvorrichtung 1 die Energiespeicher 45 direkt oder indirekt kontaktieren. Für die indirekte Kontaktierung befinden sich im Haltelement 31 ebenfalls Energiespeicherkontakte 47, die den elektrisch leitenden Kontakt zwischen Speicherplatinenteil 46 und Energiespeicher 45 herstellen.

Wie Figur 14 ebenfalls zeigt, befindet sich die Elektronik 41 mit Elektronikbauteilen 43 und Vergussmasse 44 auf der Innenseite des Elektronikplatinenteils 42.

Figur 15 zeigt ein viertes Ausführungsbeispiel einer erfindungsgemäßen Sensorvorrichtung 1 in einer Explosionsdarstellung. Hierbei werden im Folgenden insbesondere die Gemeinsamkeiten und die Unterschiede zu dem ersten Ausführungsbeispiel der Figuren 2-9 erläutert.

Die Sensorvorrichtung 1 umfasst ein Klebeelement 50, das wie in dem ersten Ausführungsbeispiel die Rückseite 13 der Sensorvorrichtung 1 bildet. Eine Platine ist einstückig und stoffschlüssig mit dem Klebeelement 50 verbunden. Hierbei ist die Platine an dem Klebeelement 50 angeklebt.

Die Platine umfasst das Speicherplatinenteil 46 und das Elektronikplatinenteil 42. Das Speicherplatinenteil 46 und das Elektronikplatinenteil 42 sind somit einstückig und materialeinheitlich ausgebildet. Ferner ist eine Sockelplatte 23 einstückig und materialeinheitlich mit dem Elektronikplatinenteil 42 und dem Speicherplatinenteil 46 ausgebildet. Auf der Sockelplatte 23 ist das Sensorplatinenteil 24 angeordnet. Das Sensorplatinenteil 24 ist stoffschlüssig mit der Sockelplatte 23 verbunden, insbesondere angelötet. Das Sensorplatinenteil 24 enthält die Spulen 21, wobei zumindest ein oder zwei Sendespule(n) 21 zwischen zwei Empfangsspulen 21 innerhalb des Sensorplatinenteils 24 angeordnet sind. Hierbei sind die Empfangs- und Sendespulen 21 mit derselben oder parallelen Spulenachsen 22 ausgebildet.

Die Spulen 21 sind elektrisch und stoffschlüssig mit der Sockelplatte 23 verbunden, insbesondere angelötet. Über die Sockelplatte 23 sind die Spulen 21 mit der Elektrik 40, d. h der Elektronik 41 und den Energiespeichern 45, verbunden. Zugleich beanstandet die Sockelplatte 23 die Spulen 21 von der Rückseite 13 der Sensorvorrichtung 1. Die Sockelplatte ist als Teil der Platine ausgebildet.

Eine Lichtschranke 52 ist innerhalb des Sensorplatinenteils 24 angeordnet. Mittels der Lichtschranke 52 kann die Stellung des Riegelelements 5 zusätzlich zu den als Spulen 21 ausgebildeten Sensors 20 detektiert werden. Es ist aber auch denkbar, dass vierte Ausführungsbeispiel ohne Lichtschranke 52 auszugestalten und die Betriebszustände nur mittels des Sensors 20 zu detektieren.

Das Halteelement 31 ist auf dem Klebelement 50 befestigt.

Das Halteelement 31 ist als ein Kunststoffrahmen ausgebildet. Das Halteelement 31 bildet die Elektronikaussparung 33 als Durchgangsöffnung aus, die als Wanne für die Vergussmasse 44 dient. Zudem umrahmt die Elektronikaussparung 33 auch den Sensor 20.

Das Halteelement 31 bildet die Energiespeicheraufnahme 32 als Durchgangsöffnung aus. Innerhalb der Energiespeicheraufnahme 32 sind die Energiespeicher 45 angeordnet. Auf dem Speicherplatinenteil 46 sind erste elektrische Kontakte für einen ersten Pol der Energiespeicher 45 ausgebildet. An dem zweiten Pol der Energiespeicher 45 liegen Energiespeicherkontakte 47 an.

Anders als in dem Ausführungsbeispiel der Figuren 2-9, sind die Energiespeicherkontakte 47 als elastische Zungen eines Deckels 30 ausgebildet. Der Deckel 30 ist elektrisch leitend, insbesondere metallisch. Der Deckel 30 umfasst Kontaktzungen 54, so dass der elektrische Strom von dem zweiten Pol der Energiespeicher 45 über die Energiespeicherkontakte 47 zu den Kontaktzungen 54 fließen kann. Die Kontaktzungen 54 liegen federnd und elektrisch kontaktierend an einem Kontaktfeld 55 des Speicherplatinenteils 46 an.

Dadurch, dass die Energiespeicherkontakte 47 und die Kontaktzungen 54 federnd ausgebildet sind und unter mechanischer Spannung an dem Energiespeicher 45 bzw. an dem Kontaktfeld 55 anliegen, ist der Stromfluss gewährleistet. Zudem drücken die Energiespeicherkontakte 47 die Energiespeicher 45 an die elektrische Kontakte für den ersten Pol, so dass auch hier der Stromfluss gewährleistet ist.

Zur elektrischen Isolierung des Deckels 30 ist der Deckel 30 mit einer nicht leitenden Folie 51 stoffschlüssig verbunden, insbesondere beklebt. Die Folie 51 bildet einen Teil der Vorderseite 12 der Sensorvorrichtung 1. Die Folie 51 und der Deckel 30 bilden zusammen ein vorderseitiges Gehäuseteil.

Des Weiteren wird die Vorderseite 12 von der Vergussmasse 44 und dem Sensorplatinenteil 24 gebildet. Es ist alternativ und nicht dargestellt möglich, die Vergussmasse 44 und eventuell das Sensorplatinenteil 24 mit der Folie 51 zu bedecken. Hierdurch ist die Sende- und/oder Empfangseinheit 63 und der Sensor 20 mit der Vorderseite 12 und der Rückseite 13 stoffschlüssig verbunden. Im Bereich der Elektronik 41 und des Sensors 20 ist die Sensorvorrichtung 1 gehäusefrei ausgebildet, d. h. Vorder- und Rückseite 12, 13 sind stoffschlüssig miteinander verbunden.

Der Deckel 30 wird an dem Halteelement 31 reversibel lösbar, insbesondere formschlüssig befestigt. Hierzu umfasst der Deckel 30 Verbindungselement 56, die durch Aussparungen 59 des Halteelements 31 geführt werden können. Danach wird durch Verschieben des Deckels 30 die Verbindungselemente 56 in Formschluss mit Vorsprüngen 58 des Halteelements 31 gebracht und damit befestigt. Die Verbindungselemente 56 und die Vorsprünge 58 sind derart ausgebildet, so dass die Energiespeicherkontakte 47 und die Kontaktzungen 54 bei geschlossenem Deckel mechanisch gespannt sind.

Bei den Ausführungsbeispielen der Figuren 2 bis 9 und 10 kann der Deckel 30 Vorsprünge aufweisen, die die Energiespeicher 45 gegen das Speicherplatinenteil drücken.

### Bezugszeichenliste

- 1: Sensorvorrichtung
- 2: Anordnung
- 3: Verschlusselement
- 4: Schloss
- 5: Riegelelement
- 6: weiteres Riegelelement
- 7: Stulp
- 8: Schließblech
- 9: Fallenöffnung
- 10: Riegelöffnung
- 11: Verschlusselementspalt
- 12: Vorderseite
- 13: Rückseite
- 20: Sensor
- 21: Spule
- 22: Spulenachse
- 23: Sockelelement
- 24: Sensorplatinenteil
- 25: Durchgangsaussparung
- 26: Raumrichtung
- 27: Steckverbindung
- 28: Spulenbereich
- 29: erste Höhe
- 30: Deckel
- 31: Halteelement
- 32: Energiespeicheraufnahme
- 33: Elektronikaussparung
- 34: Sockelplatte
- 35: Seitenschienen
- 36: Haltelementkrempe
- 37: Rastzunge
- 38: Zungenaufnahme
- 39: Seitenwände
- 40: Elektrik
- 41: Elektronik
- 42: Elektronikplatinenteil
- 43: Elektronikbauteile
- 44: Vergussmasse
- 45: Energiespeicher
- 46: Speicherplatinenteil
- 47: Energiespeicherkontakte
- 48: zweite Höhe
- 49: Abstand
- 50: Klebeelement
- 51: Folie
- 52: Lichtschranke
- 53: Beschleunigungssensor
- 54: Kontaktzungen
- 55: Kontaktfeld
- 56: Verbindungselemente
- 57: Steuereinheit
- 58: Vorsprung
- 59: Aussparung
- 60: Sensorsystem
- 61: Recheneinheit
- 62: Erfassungseinheit
- 63: Sende- und/oder Empfangseinheit
- 64: Benutzergerät
- 65: erstes Verschlusselementteil
- 66: zweites Verschlusselementteil

## Patentansprüche

1. Sensorsystem (60) für ein Verschlusselement (3), insbesondere eine Tür oder ein Fenster,
• mit einer Sensorvorrichtung (1),
• wobei die Sensorvorrichtung (1) einen Sensor (20) zum Erfassen von Sensorwerten umfasst,
• wobei das Sensorsystem (60), insbesondere die Sensorvorrichtung (1), zum Detektieren verschiedener Betriebszustände des Verschlusselements (3) ausgebildet ist,
• wobei die detektierbaren Betriebszustände zumindest einen Geöffnet-Riegel-Ausgefahren-Zustand, einen Geöffnet-Riegel-Eingefahren-Zustand, einen Geschlossen-Riegel-Ausgefahren-Zustand und einen Geschlossen-Riegel-Eingefahren-Zustand des Verschlusselements (3) umfassen,
**dadurch gekennzeichnet,**
**dass** das Sensorsystem (60), insbesondere die Sensorvorrichtung (1), dazu ausgebildet ist, Sensorwerte bei Inbetriebnahme zu den Betriebszuständen zuzuordnen.

2. Sensorsystem nach Anspruch 1, **dadurch gekennzeichnet, dass** die Sensorvorrichtung (1) eine Sende- und/oder Empfangseinheit (63) zur Kommunikation mit einem Benutzergerät (64) und/oder einer Erfassungseinheit (62) umfasst, wobei die Sensorvorrichtung (1) dazu ausgebildet ist, mittels einer Kommunikation über die Sende- und/oder Empfangseinheit (63) Sensorwerte bei Inbetriebnahme zu den Betriebszuständen zuzuordnen.

3. Sensorsystem nach einem der vorhergehenden Ansprüche, **dadurch gekennzeichnet, dass** zumindest ein Kalibrierungsstartsignal von der Sensorvorrichtung (1), insbesondere der Sende- und/oder Empfangseinheit (63), empfangbar ist.

4. Sensorsystem nach einem der vorhergehenden Ansprüche , **dadurch gekennzeichnet, dass** in dem Sensorsystem (60), insbesondere in der Sensorvorrichtung (1), hinterlegt ist, in welcher Reihenfolge verschiedene Betriebszustände bei Inbetriebnahme, insbesondere nach dem Kalibrierungsstartsignal, einzunehmen sind, wobei das Sensorsystem (60), insbesondere die Sensorvorrichtung (1), zumindest zu jedem Betriebszustand eine Referenzmessung mit dem Sensor (20) durchführt und den jeweiligen Betriebszustand mit den Sensorwerten der Referenzmessung verknüpft.

5. Sensorsystem nach einem der vorhergehenden Ansprüche, **dadurch gekennzeichnet, dass** das Sensorsystem (60), insbesondere die Sensorvorrichtung (1), anhand der Sensorwerte erkennt, dass ein weiterer Betriebszustand eingenommen ist, und den jeweiligen Betriebszustand mit der Referenzmessung verknüpft, insbesondere dass die Höhe der Änderung der Sensorwerte einen Grenzwert für die Höhe der Änderung der Sensorwerte überschreitet, damit das Sensorsystem (60) erkennt, dass ein weiterer Betriebszustand ausgehend von dem vorherigen Betriebszustand vorliegt.

6. Sensorsystem nach einem der vorhergehenden Ansprüche, **dadurch gekennzeichnet, dass** das Sensorsystem (60) die Reihenfolge, in welcher die Betriebszustände einzunehmen sind, dem Benutzer mitteilt, insbesondere dass das Sensorsystem (60) veranlasst, die Reihenfolge auf einem Benutzergerät (64) des Benutzers angezeigt wird und/oder, nachdem das Sensorsystem (60) Sensorwerte mit einem Betriebszustand verknüpft hat, der nächste zu kalibrierende Betriebszustand dem Benutzer mitgeteilt wird.

7. Sensorsystem nach einem der vorhergehenden Ansprüche, **dadurch gekennzeichnet, dass** das Sensorsystem (60) den Benutzer auffordert, nach dem Einstellen eines Betriebszustands eine vorgegebene Zeit zu warten, wobei das Sensorsystem (60) mittels konstanter oder im Wesentlichen konstanter Sensorwerte erkennt, dass ein Betriebszustand vorliegt.

8. Sensorsystem nach einem der vorhergehenden Ansprüche, **dadurch gekennzeichnet, dass** eine Betriebsposition des Sensors (20) zu einem ersten Verschlusselementteil (65) des Verschlusselements (3) im Betrieb des Verschlusselements (3) unveränderbar ist, wobei das Sensorsystem (60), insbesondere die Sensorvorrichtung (1), ausgebildet ist, eine Änderung der Betriebsposition des Sensors (20) zu dem ersten Verschlusselementteil (65) als Manipulationsversuch zu detektieren.

9. Sensorsystem nach Anspruch 8, **dadurch gekennzeichnet, dass** Sensorwerte als charakteristische Werte einer Änderung der Betriebsposition in dem Sensorsystem (60), insbesondere in der Sensorvorrichtung (1), fest hinterlegt sind oder dass eine in dem Sensorsystem (60), insbesondere in der Sensorvorrichtung (1), definierte Abweichung von den den Betriebszuständen zugeordneten Sensorwerten eine Änderung der Betriebsposition des Sensors (20) kennzeichnet.

10. Sensorsystem nach einem der vorhergehenden Ansprüche, **dadurch gekennzeichnet, dass** die Sensorvorrichtung (1) dazu vorgesehen ist, in einem Verschlusselementspalt (11) zwischen einem beweglichen ersten Verschlusselementteil (65), insbesondere Verschlusselementblatt, und einem feststehenden zweiten Verschlusselementteil (66), insbesondere Verschlusselementrahmen, angeordnet zu werden, wobei die Sensorvorrichtung insbesondere dazu vorgesehen ist, an dem ersten Verschlusselementteil (65) befestigt zu werden.

11. Sensorsystem nach einem der vorhergehenden Ansprüche, **dadurch gekennzeichnet, dass** die Sende und/oder Empfangseinheit (63) auf einer Platine, insbesondere einem Elektronikplatinenteil (42), angeordnet ist, wobei die Platine einen Teil eines Gehäuses der Sensorvorrichtung (1) bildet und/oder stoffschlüssig mit einer Vorderseite und/oder Rückseite der Sensorvorrichtung verbunden ist.

12. Sensorsystem nach einem der vorhergehenden Ansprüche, **dadurch gekennzeichnet**, die Sensorvorrichtung (1) ein Sensorplatinenteil (24) mit den Spulen (21) umfasst, wobei das Sensorplatinenteil (24) die Vorder- und/oder Rückseite (12, 13) der Sensorvorrichtung bildet und/oder stoffschlüssig mit der Vorder- und/oder Rückseite (12, 13) der Sensorvorrichtung (1) verbunden und/oder dass die Sensorvorrichtung (1) ein Sockelelement umfasst, um den Sensor (20), insbesondere die Spule(n) (21), von der Rückseite (13) zu beabstanden.

13. Sensorsystem nach einem der vorhergehenden Ansprüche, **dadurch gekennzeichnet, dass** der Sensor (20) mehrere Spulen (21) umfasst, wobei die mehreren Spulen (21) zum Erfassen der Sensorwerte ausgebildet sind und somit zur Detektion der verschiedenen Betriebszustände zumindest beitragen, wobei insbesondere hierzu unterschiedliche Impedanzen oder unterschiedliche induzierte Spannungen bei zumindest einer Spule (21) erfassbar sind.

14. Sensorsystem nach einem der vorhergehenden Ansprüche, **dadurch gekennzeichnet, dass** der Sensor zumindest eine Lichtschranke (52) umfasst, wobei die Lichtschranke (52) zum Erfassen der Sensorwerte ausgebildet ist uns somit zur Detektion der verschiedenen Betriebszustände des Sensors zumindest beiträgt, wobei insbesondere hierzu eine Helligkeitsänderung bei einem Empfänger der Lichtschranke (52) erfasst wird.

15. Verfahren zur Inbetriebnahme eines Sensorsystem (60) für ein Verschlusselement (3), insbesondere eine Tür oder ein Fenster, wobei das Sensorsystem (60) eine Sensorvorrichtung (1) umfasst, wobei die Sensorvorrichtung (1) einen Sensor (20) zum Erfassen von Sensorwerten umfasst, wobei das Sensorsystem (60), insbesondere die Sensorvorrichtung (1), zum Detektieren verschiedener Betriebszustände des Verschlusselements (3) ausgebildet ist, wobei die detektierbaren Betriebszustände zumindest einen Geöffnet-Riegel-Ausgefahren-Zustand, einen Geöffnet-Riegel-Eingefahren-Zustand, einen Geschlossen-Riegel-Ausgefahren-Zustand und einen Geschlossen-Riegel-Eingefahren-Zustand des Verschlusselements (3) umfassen, wobei das Sensorsystem (60), insbesondere die Sensorvorrichtung (1) Sensorwerte bei Inbetriebnahme zu den Betriebszuständen zuzuordnen.
